(19) Europäisches Patentamt
European Patent Office
Office européen des brevets

(11) **EP 1 923 772 A1**

(12) **EUROPEAN PATENT APPLICATION**

(43) Date of publication:
**21.05.2008 Bulletin 2008/21**

(51) Int Cl.:
***G06F 3/01*** (2006.01)　　***G06F 17/27*** (2006.01)

(21) Application number: **06301152.2**

(22) Date of filing: **16.11.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **FRANCE TELECOM**
**75015 Paris (FR)**

(72) Inventor: **Kobayashi, Tatsumi,**
**France Telecom Japan**
**Shinjuku-ku, Tokyo 160-0022 (JP)**

(54) **Spatial display device, spatial method, and program**

(57)　　A spatial display device that displays a projection image consisting of a three-dimensional space projected on a two-dimensional plane, including a position information acquisition portion that acquires a first object position information that shows a position of a first object in said three-dimensional space and a second object position information that shows a position of a second object in said three-dimensional space; and a positional relation information acquisition portion that acquires positional relation information that shows the positional relation in three-dimensional space between the first object and the second object based on the first object position information and the second object position information acquired by the position information acquisition portion.

FIG. 27

```
                    ┌─────────┐
                    │  START  │
                    └─────────┘
                         │
    ┌──────────────────────────────────────────┐
    │  USER: "X MAY BE ON THE TABLE…"           │──S11
    └──────────────────────────────────────────┘
                         │
    ┌──────────────────────────────────────────┐
    │  SPATIAL DISPLAY DEVICE 1:                │
    │  MOVE A CAMERA TO TAKE A SHOT OF          │──S12
    │  REGION ON THE TABLE,                     │
    │  AND SEND IMAGE TO USER'S CELL PHONE      │
    └──────────────────────────────────────────┘
                         │
    ┌──────────────────────────────────────────┐
    │  USER: "THAT IS MY CUP.                   │──S13
    │  HOW ABOUT ON THE TV…? X IS BROWN."       │
    └──────────────────────────────────────────┘
                         │
    ┌──────────────────────────────────────────┐
    │  SPATIAL DISPLAY DEVICE 1:                │──S14
    │  UPDATE COLOR INFORMATION OF X            │
    └──────────────────────────────────────────┘
                         │
    ┌──────────────────────────────────────────┐
    │  SPATIAL DISPLAY DEVICE 1:                │
    │  MOVE A CAMERA TO TAKE A SHOT OF          │──S15
    │  REGION ON THE TV,                        │
    │  BUT FIND OUT X IS IN FRONT OF TV         │
    └──────────────────────────────────────────┘
                         │
    ┌──────────────────────────────────────────┐
    │  SPATIAL DISPLAY DEVICE 1:                │
    │  "LOOK AT THE BROWN ONE IN FRONT OF THE   │──S16
    │  TV. IS IT YOUR X?"                       │
    └──────────────────────────────────────────┘
                         │
    ┌──────────────────────────────────────────┐
    │  USER: "YES, THAT'S IT! THANKS.           │──S17
    │  I HAVE TO GET BACK HOME."                │
    └──────────────────────────────────────────┘
                         │
                    ┌─────────┐
                    │   END   │
                    └─────────┘
```

EP 1 923 772 A1

## Description

### TECHNICAL FIELD

The present invention relates to a spatial display device, a spatial display method, and a program.

### BACKGROUND ART

There is known a spatial display device that displays a projection image consisting of a virtual or actual three-dimensional space projected onto a two-dimensional plane. In such a spatial display device, a technique (called spatial reasoning) for specifying a region in the three-dimensional space based on words uttered by a person and having it reflected in the projection image is being researched (for example, refer to Non-Patent Documents 1 through 3).
Non-Patent Document 3 discloses a spatial display device that, in the case of a person saying "The right of the desk," can identify the region in the three-dimensional space that is expressed by this sentence.

[Non-Patent Document 1] Mukerjee A.: Neat vs Scruffy: A Survey of Computational Models for Spatial Expressions. In Patrick Olivier and Klaus-Peter Gapp, eds., Representation and Processing of Spatial Expressions, 1998 Lawrence Erlbaum Associates Inc. ISBN 0805822852.

[Non-Patent Document 2] K. P. Gapp: Basic Meanings of Spatial Relations: Computation and Evaluation in 3D Space. In 12th National Conference on Artificial Intelligence, AAAI-94, pages 1393-1398, Seattle, Washington, July 31, 1994. The MIT Press. ISBN 0-262-61102-3.

[Non-Patent Document 3] Tokunaga Takenobu, Koyama Tomofumi, Saito Suguru, Okumura Manabu. Bridging the Gap Between Language and Action. Intelligent Virtual Agents. 4th International Workshop, IVA 2003 Kloster Irsee, Germany, September 2003 Proceedings. Edited by J.G. Carbonell and J. Siekmann. Subseries of Lecture Notes in Computer Science. Lecture Notes in Artificial Intelligence. Vol.2792, pp.127-135. Springer. 2003. Sep. ISBN 3-540-20003-7.

### DISCLOSURE OF THE INVENTION

However, in the spatial display devices disclosed in the aforementioned non-patent documents, there has been the problem of being unable to give a precise answer to a question based on the positional relation between two objects uttered by a person. For example, in response to the question "Is there a trash box to the left of the desk?" based on the object "trash box" and positional relation "left" of an object "desk", the spatial display device is unable to determine whether or not the proposition is true or not, and so cannot give a precise answer.
Accordingly, one of the objectives of the present invention is to provide a spatial display device, a spatial display method, and a program that can give an accurate response to a question based on the positional relation between two objects that are uttered by a user.
A spatial display device according to the present invention for solving the aforementioned problem is a spatial display device that displays a projection image consisting of a three-dimensional space projected on a two-dimensional plane, characterized by including a position information acquisition portion that acquires a first object position information that shows a position of a first object in said three-dimensional space and a second object position information that shows a position of a second object in said three-dimensional space; and a positional relation information acquisition portion that acquires positional relation information that shows the positional relation in said three-dimensional space between said first object and said second object based on the first object position information and the second object position information acquired by said position information acquisition portion.
Thereby, since the position of each object is initially acquired and the positional relation information showing the positional relation between the objects is acquired, a precise answer can be given to a question (for example, "Is there a trash box to the left of the desk?") uttered by a person based on the positional relation between the two objects.
Also, in the aforedescribed spatial display device, said position information acquisition portion may also acquire said second object position information by having the user instruct the position of said second object on said projection image.
Thereby, the second object position information can be acquired based on the instruction of the user.
Moreover, the aforedescribed spatial display device may include an input receiving portion that receives an input of a positional relation instruction term that shows the positional relation in said three-dimensional space between said first object and said second object; a region specifying portion that specifies a region in said three-dimensional space that is in the positional relation with said first object shown by said positional relation instruction term; and a display control portion that displays a projection image that consists of the region specified by said region specifying portion projected on said two-dimensional plane, wherein said position information acquisition portion acquires said second object position information by having the user indicate the position of said second object on said projection image that is displayed by said display control portion.

Thereby, since it is possible to display a projection image showing the position where a second object likely is based for example on the positional relation instruction term uttered by the user, instruction by the user of the position of a second object is facilitated.

Moreover, in this spatial display device, said region specifying portion may include a grid point determination portion that determines a plurality of grid points based on said first object position information, and said spatial display device may include a grid point position judgment portion that judges whether or not each of the grid points determined by said grid point determination portion and the position shown by said first object position information are in the positional relation in said three-dimensional space shown by said positional relation instruction term, and said region specifying portion may specify a region in said three-dimensional space in accordance with each judgment result of said grid point position judgment portion for each grid point determined by said grid point determination portion.

Thereby, the region specifying portion, by means of the determination for each grid point, can specify a region in said three-dimensional space that is in the positional relation with the first object shown by the aforementioned positional relation instruction term.

Moreover, the spatial display device may include a reference frame information storage portion that associates and stores first object information that shows said first object and reference frame information that shows a reference frame to serve as a basis when judging the positional relation with the first object, said region specifying portion may specify the position in said three-dimensional space that represents one or a plurality of grid points for which the judgment result of said grid point position judgment portion is affirmative based on the reference frame information stored in said reference frame information storage portion for said first object and the direction of the viewpoint of said projection image, and said display control portion may display said projection image based on said position specified by said region specifying portion.

The specification of a region with a positional relation instruction term cannot be accurately performed when the correspondence relation of the positional relation instruction term and the positional relation is unclear. For example, there is a difference between a correspondence relation based on the positional relation intrinsic to a first object (for example, assuming a "desk", then the side with a drawer would be the "front", and, facing the drawer, the left side would be the "right", and similarly the right side would be the "left". Herein below, this correspondence relation is called the "intrinsic reference frame".) and a correspondence relation based on the positional relation in the case of viewing from the viewpoint of the projection image (for example, assuming a "desk", the position closest to the viewpoint would be the "front", and, facing the "front", the left side would be the "left", and the right side would be the "right". Herein below, this correspondence relation is called the "relative reference frame".). Therefore, the specification result will differ depending on which correspondence relation is chosen.

Since the aforementioned spatial display device stores the reference frame information (information that indicates the correspondence relation to be selected) and specifies the position in the three-dimensional space to be displayed based on that correspondence relation, errors in the specification result due to the aforementioned selection error are eliminated.

Moreover, this spatial display device may include a direction judgment portion that judges the direction of said first object; and a reference frame information acquisition portion that, in accordance with the judgment result of said direction judgment portion, performs acquisition of said reference frame information for said first object based on the position of said second object indicated by an instruction of the user and said positional relation indicated by said positional relation instruction term and writes the reference frame information to said reference frame information storage portion.

For example, in the case of a first object facing the "front" intrinsic to the viewpoint direction of the projection image, the left side of the first object when viewed from the viewpoint of the projection image is the left in the "relative reference frame" and the right in the "intrinsic reference frame". That is, in the case of the first object facing the "front" that is intrinsic to the viewpoint direction of the projection image, when the positional relation indicated by the aforementioned positional relation instruction term is "left", and the user indicates the left side of the first object when viewed from the viewpoint of the projection image, it can be said that the user intends to use the "relative reference frame". On the other hand, in the case of the first object facing the "front" that is specific to the viewpoint direction of the projection image, when the positional relation indicated by the aforementioned positional relation instruction term is "right", and the user indicates the left side of the first object when viewed from the viewpoint of the projection image, it can be said that the user intends to use the "intrinsic reference frame".

In the aforementioned spatial display device, using these properties, since it is possible to acquire reference frame information based on the positional relation instruction term and the instruction input by the user in accordance with the direction of the first object, it is possible to accurately reflect the intention of the user in the reference frame information to be stored in the reference frame information storage portion.

Also, the spatial display apparatus according to another aspect of the present invention is a spatial display device that displays a projection image consisting of a three-dimensional space projected onto a two-dimensional plane, characterized by including an input receiving portion that receives an input of a positional relation instruction term that shows the positional relation in said three-dimensional space between said first object and said second object; a position information acquisition portion that acquires a first object position information that shows a position of said first object and a second object position information that shows a position of said second object; a spatial reasoner that analyzes whether or not said first object and said second object are in the positional relation in said three-dimensional space shown by said positional relation instruction term based on said first object position information and said second object position information; and a second object position judgment portion that judges whether or not said first object and said second object are in the positional relation shown by said positional relation instruction term based on the judgment result of said spatial reasoner.

Thereby, using the spatial reasoner, it is possible to draw a conclusion as to whether or not the positional relation between the first object and the second object shown by the input positional relation instruction term is correct. Therefore, the aforementioned spatial display device can accurately respond to a question (for example, "Is there a trash box to the left of the desk?") uttered by a person based on the positional relation between two objects.

Also, this spatial display device may include a reference frame information storage portion that associates and stores first object information that shows said first object and reference frame information that shows a reference frame to serve as a basis when judging the positional relation with the first object, and a second object position information correction portion that corrects said second object position information that is acquired by said position information acquisition portion based on the reference frame information stored in said reference frame information storage portion for said first object and the direction of the viewpoint of said projection image, wherein said spatial reasoner, viewing from the viewpoint of said projection image, judges whether or not said first object and said second object are in the positional relation in said three-dimensional space shown by said positional relation instruction term based on said first object position information and said second object position information, and said second object position judgment portion inputs said first object position information and said second object position information after correction by said second object position information correction portion to said spatial reasoner and judges whether or not said first object and said second object are in the positional relation shown by said positional relation instruction term based on the judgment result obtained as a result.

When judging the positional relation of the first object and the second object by the positional relation instruction term, a correct judgment cannot be made when the correspondence relation of the positional relation instruction term and the positional relation is unclear. This situation is the same as that of the case of the region specification mentioned above.

Also, the spatial reasoner, viewing from the viewpoint of the projection image (using the "relative reference frame"), judges the positional relation of two objects, and so a correct judgment cannot be made in the case that the "intrinsic reference frame" must be used.

Since the aforementioned spatial display device stores the reference frame information (information that indicates the correspondence relation to be selected) and inputs the second object position information to the spatial reasoner after correction based on the reference frame information of the first object, it is possible to obtain a correct judgment result.

Also, a spatial display method according to the present invention is a spatial display method for displaying a projection image consisting of a three-dimensional space projected onto a two-dimensional plane, characterized by including a position information acquisition step that acquires a first object position information that shows a position of a first object in said three-dimensional space and a second object position information that shows a position of a second object in said three-dimensional space, and a positional relation information acquisition step that acquires positional relation information that shows the positional relation in said three-dimensional space between said first object and said second object based on the first object position information and the second object position information acquired in said position information acquisition step.

Also, a program according to the present invention is a program for causing a computer to act as a spatial display device that displays a projection image consisting of a three-dimensional space projected onto a two-dimensional plane, characterized by causing said computer to further function as a position information acquisition portion that acquires a first object position information that shows a position of a first object in said three-dimensional space and a second object position information that shows a position of a second object in said three-dimensional space, and as a positional relation information acquisition portion that acquires positional relation information that shows the positional relation in said three-dimensional space between said first object and said second object based on the first object position information and the second object position information acquired by said position information acquisition portion.

BRIEF DESCRIPTION OF THE DRAWINGS

FIG. 1 is an outline block diagram showing the system constitution of the spatial display apparatus according to an embodiment of the present invention.

FIG. 2 is a drawing showing the camera setup according to an embodiment of the present invention.

FIG. 3 is a drawing showing an example using a personal computer as a terminal according to an embodiment of the present invention.

FIG. 4 is a drawing showing an example using a mobile phone as a terminal according to an embodiment of the present invention.

FIG. 5 is an outline block diagram showing the relation of the subcomponents of the dialogue manager according to an embodiment of the present invention.

FIG. 6 is a drawing for describing the ultrasonic positioning sensor method of providing a position of an anchored object according to an embodiment of the present invention.

FIG. 7 is a drawing for describing the ultrasonic positioning sensor method for providing a position of an anchored object according to an embodiment of the present invention.

FIG. 8 is a drawing for describing the RFID floor sensor method for providing a position of an anchored object according to an embodiment of the present invention.

FIG. 9 is a drawing for describing a method using an active RFID tag in providing a position of an anchored object according to an embodiment of the present invention.

FIG. 10 is a drawing showing portions relating to a positional relation acquisition process among the function blocks of the dialogue manager according to an embodiment of the present invention.

FIG. 11 is a drawing showing an example of an object table according to an embodiment of the present invention.

FIG. 12 is a drawing showing an example of a dictionary table according to an embodiment of the present invention.

FIG. 13 is a drawing for describing a calculation process of the front of an anchored object according to an embodiment of the present invention.

FIG. 14A and 14B are drawings for describing a plurality of grid points determined by a grid point determination portion according to an embodiment of the present invention. FIG. 14C is a drawing showing an example of a region specified by the region specifying portion, assuming the positional relation indicated by the positional relation instruction term according to an embodiment of the present invention is the "front".

FIG. 15 is a drawing showing the correspondence of the positional relation with each SVM classifier 140-i included in the spatial reasoner according to an embodiment of the present invention.

FIG. 16 is a drawing for describing the relative position information according to an embodiment of the present invention.

FIG. 17 is a drawing for describing the spatial reasoner according to an embodiment of the present invention.

FIG. 18A, 18B are drawings for describing the process of calculating the center of gravity according to an embodiment of the present invention.

FIG. 19 is a drawing for describing the reference frame according to an embodiment of the present invention.

FIG. 20 is a drawing for specifically describing how to find out the reference frame by the reference frame acquisition portion according to an embodiment of the present invention.

FIG. 21A, 21B, 21C are drawings for describing the correction process of the center of gravity coordinates according to an embodiment of the present invention.

FIG. 22A, 22B, 22C are drawings for describing coordinate system conversion by the positioning portion according to an embodiment of the present invention.

FIG. 23 is a drawing for describing the process of the positional relation acquisition portion acquiring positional relation information according to an embodiment of the present invention.

FIG. 24 is a drawing showing a portion relating to the target object position judgment process among the function blocks of the dialogue manager according to an embodiment of the present invention.

FIG. 25A, 25B, 25C are drawings for describing correction of the target object position information by a target object position information correction portion according to an embodiment of the present invention.

FIG. 26 is an outline block drawing showing only the dialogue manager, the world model manager, and the spatial reasoner among the components of the spatial display device according to an embodiment of the present invention.

FIG. 27 is a drawing showing the process flow in the interaction phase with object recognition according to an embodiment of the present invention.

BEST MODE FOR CARRYING OUT THE INVENTION

This invention relates to a new way of man-machine interaction by using a fixed camera, a remote display and conversational interface in order to locate objects in a room environment from a remote place (or inside the room). Looking at a scene of the room through a two-dimensional display of remote terminals (such as a mobile phone or personal computer), users can control a camera's direction to see an object or region of interest merely by expressing a spatial relation of objects. This invention is supported by an IC-tag positioning system to provide a position of anchored objects as a fixed position at the room. The core part of this invention is a spatial reasoning technique to learn and infer a mapping between spatial expression and geometrical relation for two objects.

There are three main methods included in this best mode described as the following embodiment.

The first method is a spatial reasoning technique to reason a possible spatial region from a spatial expression and reason an appropriate spatial expression from a physical location of specified two objects. For a mapping model between spatial expressions and physical locations, a machine learning approach of human capability of spatial recognition is used to learn a Support Vector Machine (SVM) classifier as a mapping engine between spatial language and physical attributes. In addition, it is necessary to solve a problem of the reference frame selection (intrinsic frame, relative frame and absolute frame), too, for both reasoning directions. And the required accuracy here is a rough level enough to specify a spatial "region" to control a camera.

The second method is an interpretation of given spatial expression (utterance) to extract a formalized predicate (first order predicate logic) to give the parameters to the SVM classifier. And in opposite, the interpretation generates an utterance to output. This interpretation needs to refer to a world model and object knowledge stored in a database described below for the interpretation.

The third method is a "world model database", which maintains a map (geometrical knowledge and its changes) of the room and object knowledge (general dictionary knowledge and visually confirmed or not). This database provides a dialogue management component with these types of information.

In order to realize the feasible system, several existing bricks have to be integrated. One is a camera (hardware) with remote control capability, basic object recognition functionality (to detect color, shape, etc.), and the other one is the object positioning system (to acquire a position of anchored objects).

The specific embodiment of the present invention shall be described with reference to the attached drawings.

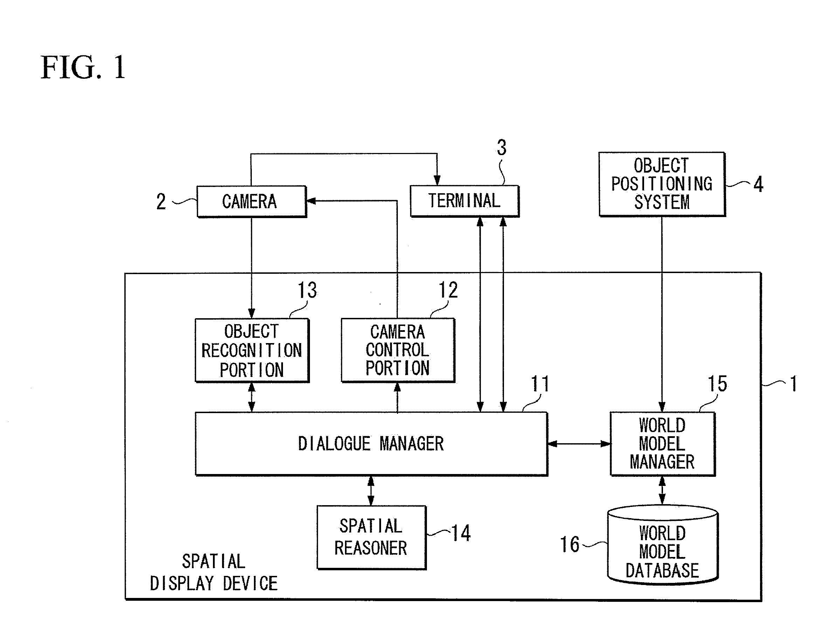

FIG. 1 is an outline block diagram showing the system constitution of the spatial display apparatus according to an embodiment of the present invention. As shown in the same drawing, a spatial display device 1 is connected to a camera 2, a terminal 3, and an object positioning system 4. Also, the spatial display device 1 is constituted to include therein a dialogue manager 11, a cameral control portion 12, an object recognition portion 13, a spatial reasoner 14, a world model manager 15, and a world model database 16.

The spatial display device 1 is a device that displays a projection image consisting of a three-dimensional space (for example, the inside of a room, or the like) projected on a two-dimensional plane. Specifically, the camera 2 captures the three-dimensional space, and the continuous two-dimensional projection image obtained as a result is displayed on the screen of the terminal 3. Below, the description shall be continued assuming the aforesaid three-dimensional space is the inside of a room. In the present embodiment, the width, height, and depth of the room shall be known.

When the user asks the question "Is there a trash box to the left of the desk?", the spatial display device 1 generates an answer to the question by either of the two following methods.

The first is a method of acquiring the positional relation of two objects in advance (e.g., "trash box" and "desk" in the question above). Below, the process according to this first method shall be called the positional relation acquisition process.

In the positional relation acquisition process, the spatial display device 1 acquires the positional relation in the three-dimensional space based on the position information of the two objects. In this process, the spatial display device 1 gets the user to instruct the position of one object (target object) on the projection image. In order to get the user to instruct the position of the target object, the user is prompted to utter a positional relation instruction term that indicates the positional relation of another object (landmark object) and the target object, and based on that utterance, the region where the target object exists is specified and a process is performed of pointing the camera 2 toward that region. Also, the spatial display device 1 performs a process of converting the position of the garget object that is instructed on the two-dimensional projection screen into a position in three-dimensional space.

The spatial display device 1 then generates a response to the above question ("Is there a trash box to the left of the desk?") based on the positional relation thus acquired (the positional relation of the target object "trash box" and the landmark object "desk" in the three-dimensional space).

The second is a method of judging the positional relation in the three-dimensional space when there is a question. Below, the process according to this second method shall be called the target object position judgment process.

In the target object position judgment process, the spatial display device 1 first acquires position information of the landmark object and the target object. Then, it outputs this position information and the positional relation instruction term included in the question to the spatial reasoner 14, which judges whether or not the positional relation between the landmark object and the target object is in the positional relation shown by the positional relation instruction term in the three-dimensional space. Then, based on this judgment result, the spatial display device 1 judges the positional relation between the landmark object and the target object (the positional relation of the target object "trash box" and the landmark object "desk"), and generates a response to the above question ("Is there a trash box to the left of the desk?").

The camera 2, the terminal 3, and the object positioning system 4 shall first be described below, after which the spatial display device 1 will be described in detail.

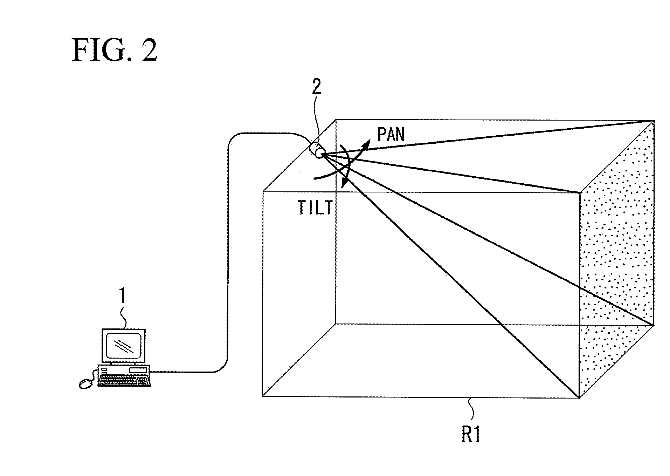

First the camera 2 shall be described. FIG. 2 shows the setup of the camera 2. As shown in the drawing, the camera 2 is installed on the opposite wall of a room R1 near the boundary between the wall and the ceiling. In the present embodiment, the setup location of the camera 2 in the room R1 is known information.

The camera 2 is constituted to be controllable in the horizontal direction (pan) and the vertical direction (tilt). As a result, it is installed and constituted to be able to view all of the room R1. Here, the camera 2 is provided with the following features. Namely, the camera 2 has color image capability, pan/tilt/zoom (specifically, ±170 degree pan; -1 to 90 degree tilt; 10× zoom), enough wide angle of field to view the whole area of the opposite wall, minimum 640 × 480 pixel resolution, minimum frame rate of 10 frames per second, and network connection to the server (via wireless LAN or wired LAN).

The object recognition portion 13 judges whether or not the object having the specified characteristics is in the image taken by the camera 2, and thereby has the function of recognizing whether or not the object is included in the image taken by the camera 2.

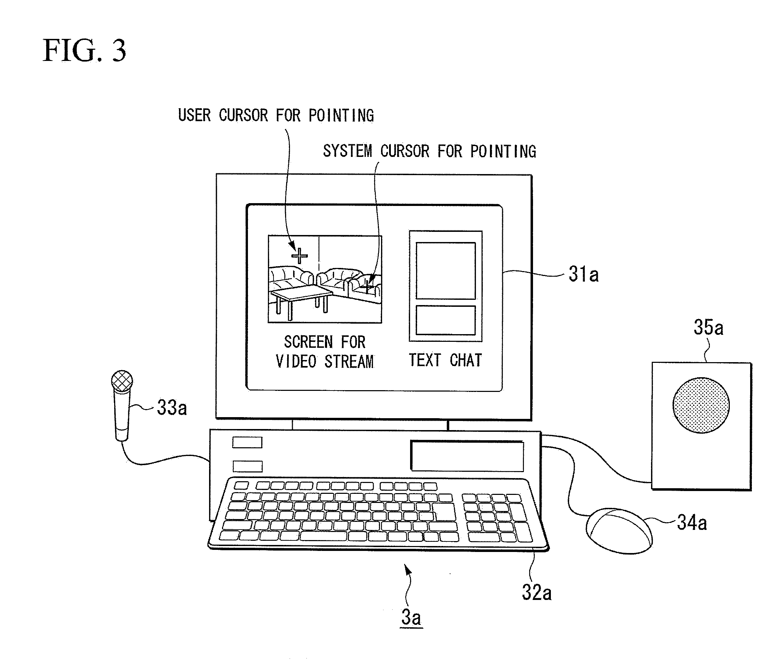

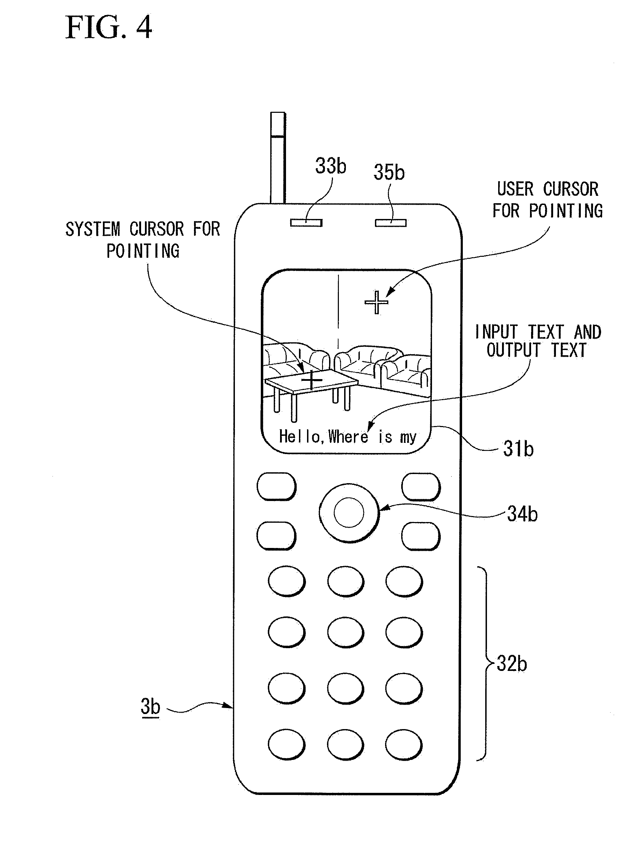

Next, the terminal 3 shall be described. The terminal 3 is preferably provided with a CPU and memory, and is preferably one that uses a computer terminal that performs information processing. Here, two types of terminals are particularly considered for use as the terminal 3: a personal computer and a mobile phone. FIG. 3 shows an example of using a personal computer as the terminal 3, while FIG. 4 shows an example of using a mobile phone as the terminal 3.

In the case of using a personal computer as the terminal 3, the terminal 3, as shown in FIG. 3, is constituted to include a screen 31a, a keyboard 32a, a microphone 33a, a pointing device 34a, and a speaker 35a. Also, in the case of using a mobile phone as the terminal 3, the terminal 3, as shown in FIG. 4, is constituted to include a screen 31b, a keyboard 32b, a microphone 33b, a pointing device 34b, and a speaker 35b. Each of the constituent elements shown here are common to both a personal computer and a mobile phone, and so "a" and "b" shall be omitted below when describing functions common to both.

The microphone 33 and the speaker 35 function as part of a speech interface. The speech interface uses the microphone 33 to pick up sounds and generate a speech signal, which is output to the dialogue manager 11 of the spatial display device 1. Also, the speech signal that is input from the dialogue manager 11 of the spatial display device 1 is output from the speaker 35.

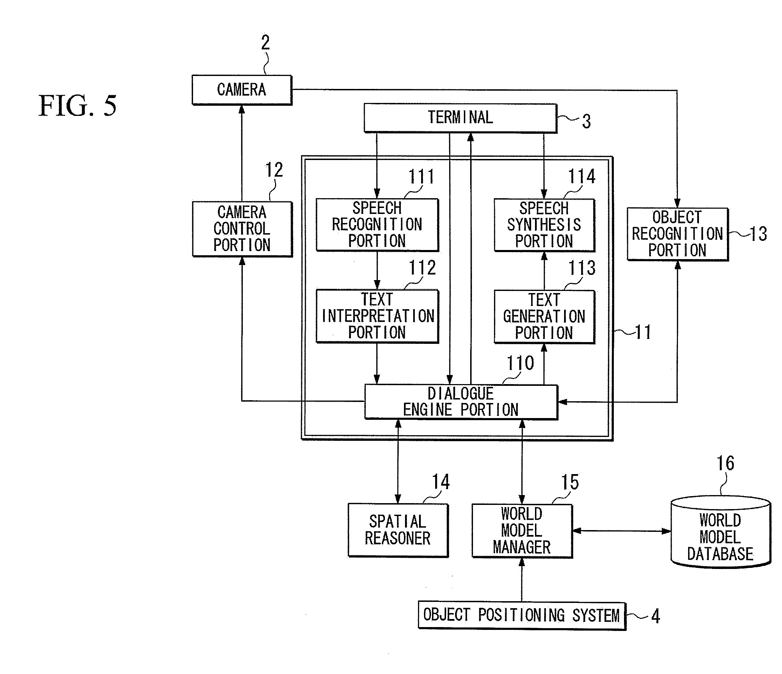

Here, the speech interface includes the internal constitution of the dialogue manager 11, which shall be described in detail. FIG. 5 is an outline block diagram showing the relation of the subcomponents of the dialogue manager 11. As shown in the same drawing, the dialogue manager 11 is constituted to include a dialogue engine portion 110, a speech recognition portion 111, a text interpretation portion 112, a text generation portion 113, and a speech synthesis portion 114.

The terminal 3 inputs the speech signal that is picked up by the microphone 33 to the dialogue manager 11. The speech recognition portion 111 generates text data from the speech signal that is input using language analysis processing, and outputs the text data to the text interpretation portion 112.

The text interpretation portion 112 converts the input text data into an internal knowledge representation. This internal knowledge representation is a data format that enables a computer to handle utterances of a user. Here, the internal knowledge representation mainly covers the following five types of knowledge: spatial expression for specifying position in space, expression about the front of objects, camera control expressions for pan, tilt and zoom, object knowledge, and informative reply.

Using grammatical and syntactical knowledge and without a dictionary of nouns, the text interpretation portion 112 translates text data into the internal knowledge representation by referencing the following Table 1. Table 1 shows examples of text data and the internal knowledge representation relating to the processing of the text interpretation portion 112, as well as showing specific examples for each data. After the interpretation, the text interpretation portion 112 sends the produced data to the dialogue engine portion 110.

Table 1

| | Text Data | Internal Knowledge Representation |
|---|---|---|
| Spatial Expression | X + Be-Verb+PREP+Y<br>Ex. The apple is on the desk.<br>Ex. The wallet was on the desk yesterday. | STATE(X, Y, PREP, TIME)<br>Ex. STATE("apple", "desk", "ON", "now")<br>Ex. STATE("wallet", "desk", "ON", "yesterday") |
| | Be-Verb+there+X+PREP+Y?<br>Ex. Is there the apple on the desk?<br>Ex. Was there the wallet on the table one hour ago? | CONFIRM(X, Y, PREP, TIME)<br>Ex. CONFIRM("apple", "desk"," ON")<br>Ex. CONFIRM("wallet", "table"," ON", "1 hour ago") |
| | Let me look +at+X+PREP+Y.<br>Show me + X+PREP+Y.<br>Ex. Show me the chair in front of the desk? | FIND(X, Y, PREP)<br>Ex. FIND("chair", "desk", "FRONT") |

(continued)

|  | Text Data | Internal Knowledge Representation |
|---|---|---|
|  | Let me look +at+PREP+Y?<br>Show me + PREP+Y?<br>Where+Be-Verb+PREP+Y?<br>Ex. Show me the front of the desk?<br>Ex. Where is the front of the desk? | FIND(NULL, Y, PREP)<br>Ex. FIND(NULL, "desk", "FRONT")<br>Ex. FIND(NULL, "desk", "FRONT") |
| Object front | X+face(s)+to+Y.<br>Ex. The table faces to the sofa. | FRONT(X, Y)<br>Ex. FRONT("table", "sofa") |
| Camera Control | Turn +DIR (+ ADJ and/or DEGREE).<br>Ex. Turn right a little bit (=5 deg).<br>Ex. Turn left more (=5deg).<br>Ex. Turn right 10 degree. | LOOK(DIR, DEGREE)<br>Ex. LOOK("RIGHT", "5")<br>Ex. LOOK("LEFT", "5")<br>Ex. LOOK("RIGHT", "10") |
|  | Look +DIR (+ ADJ and/or DEGREE).<br>Ex. Look up a little bit (=5 deg).<br>Ex. Look down more (=5deg).<br>Ex. Look up 5 degree. | LOOK(DIR, DEGREE)<br>Ex. LOOK("UP", "5")<br>Ex. LOOK("DOWN", "5")<br>Ex. LOOK("UP", "5") |
|  | Zoom+DIR(+ ADJ and/or DEGREE).<br>Ex. Zoom in a little bit (= 1.5 times).<br>Ex. Zoom out more (=0.5 times).<br>Ex. Zoom in two times. | ZOOM(DEGREE)<br>Ex. ZOOM ("1.5")<br>Ex. ZOOM ("0.5")<br>Ex. ZOOM ("2") |
| Object knowledge | X+Be-Verb+Y.<br>Ex. The apple is fruit. (class)<br>Ex. The Sofa is red. (color)<br>Ex. The furniture is large. (size) | ISA(X, Y)<br>Ex. ISA("apple", "fruit")<br>Ex. ISA("sofa", "red")<br>Ex. ISA("furniture", "large") |
|  | X+Be-Verb+part+of+Y.<br>Ex. The mouse is a part of the computer | PARTOF(X, Y)<br>Ex. PART OF("mouse", "computer") |
| Informative Reply | 1. Yes.<br><br>2. No.<br>3. Could you repeat, please?<br>4. Please wait.<br>5. I don't know. | REPLY(TYPE)<br>TYPE=:<br>1. YES<br>2. NO<br>3. REPEAT<br>4. WAIT<br>5. NOT_KNOW |

Next, the text generation portion 113 receives the input of the internal knowledge representation from the dialogue engine portion 110, converts it to text data, and outputs the text data to the speech synthesis portion 114. Table 2 shows examples of the internal knowledge representation and text data relating to the processing of the text generation portion 113, as well showing specific examples for each data.

Table 2

|  | Internal Knowledge Representation | Text Data |
|---|---|---|
| Spatial Expression | STATE(X, Y, PREP, T/F, TIME)<br>Ex. STATE("apple", "desk", "ON", "False")<br>Ex. STATE("chair", "desk", "FRONT", "True")<br>Ex. STATE("banana", "table", "ON", "yesterday") | X + Be-Verb+(not)+PREP+Y+TIME<br>Ex. The apple is not on the desk (now).<br>Ex. The chair is in front of the desk.<br>Ex. The banana was on the table yesterday. |
| Informative Reply | REPLY(TYPE)<br>TYPE=:<br>1. YES<br>2. NO | TYPE=:<br><br>1. Yes.<br>2. No. |

(continued)

|  | Internal Knowledge Representation | Text Data |
|---|---|---|
|  | 3. REPEAT<br>4. WAIT<br><br>5. THANK | 3. Could you repeat, please?<br>4. Please wait for a while.<br>Now, processing.<br>5. Thank you. |
| Question | QESTION(TYPE, ARG)<br>TYPE=:<br>1. CONFIRM_USER<br>2. ASK_OBJ_WITH_CURSOR<br>3. ASK_OBJ_IN_SCENE<br>4. ASK_OBJ_POS_ON_DISPLAY<br>5. ASK_OBJ_CLASS<br>6. ASK_OBJ_COLOR<br>7. ASK_OBJ_SIZE<br>8. ASK_OBJ_FRONT | TYPE=:<br><br>1. Are you there?<br>2. Is this (ARG) you are looking for?<br>3. Can you see (ARG)?<br>4. Please designate (ARG) on the screen.<br>5. What is (ARG) in a simple word?<br>6. What color is (ARG)?<br>7. What large is (ARG)?<br>8. What does (ARG) face to? |

The speech synthesis portion 114 synthesizes a speech signal based on the text data that is input from the text generation portion 113 and outputs the speech signal to the terminal 3. The terminal 3 outputs the input speech signal to the speaker 35.

Now to return to FIG. 3 and FIG. 4. The screen 31 and the keyboard 32 function as a portion of a text chat interface. The text chat interface receives the input of text from the keyboard 32 for output to the spatial display device 1, and also receives the input of text from the spatial display device 1 for output to the screen 31.

The screen 31 and the pointing device 34 function as a portion of a coordinate input interface. The coordinate input interface outputs the coordinates to the spatial display device 1 in the case that the coordinates on the screen 31 are instructed by the pointing device 34.

Next, the object positioning system 4 shall be described. The object positioning system 4 determines the positions of anchored objects (described below) such as a table, sofa, and refrigerator using any one of the three methods given below. Note that all of these methods utilize a memory device with a wireless transmitter described below, for instance an ultrasonic transmitter and an RFID tag, which is attached to an anchored object. Such a memory device with the wireless transmitter records an object ID to be recorded in an object table described below in advance. The object positioning system 4 receives the object ID from the memory device with the wireless transmitter by wireless transmission. Of course, methods other than these may also be employed.

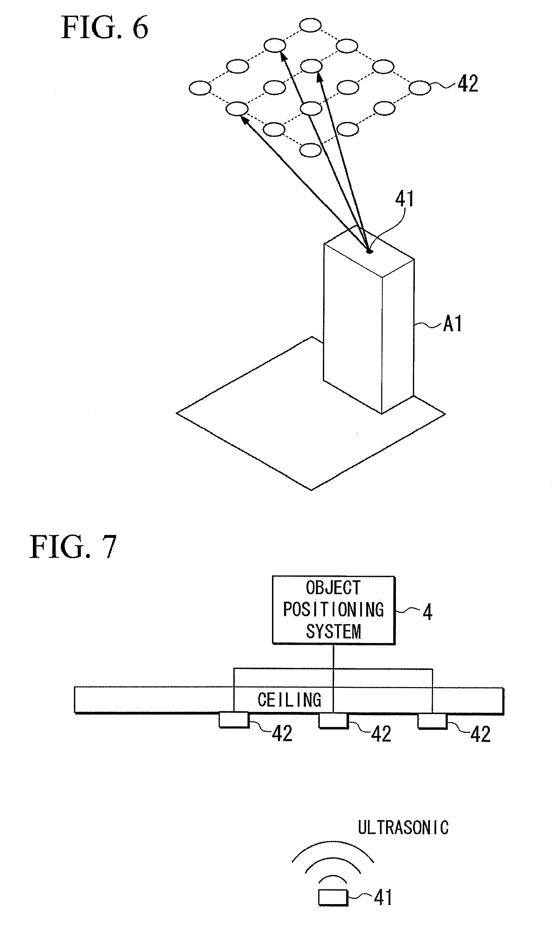

The first is a method called the ultrasonic positioning sensor. FIG. 6 and FIG. 7 are drawings for explaining this method. As shown in FIG. 6 and FIG. 7, ultrasonic receivers 42 are disposed in the form of a matrix on the ceiling of a room. Also, the ultrasonic transmitter 41 is installed on an anchored object A1.

The object positioning system 4 transmits from the ultrasonic transmitter 41 ultrasonic signals. At least three ultrasonic receivers 42 receive the ultrasonic signals transmitted by ultrasonic transmitter 41 and, based on the difference in arrival time of the ultrasonic signal at each ultrasonic receiver 42, the object positioning system 4 calculates the coordinates of the ultrasonic transmitter 41, and then determines the position of the anchored object A1 based on the coordinates.

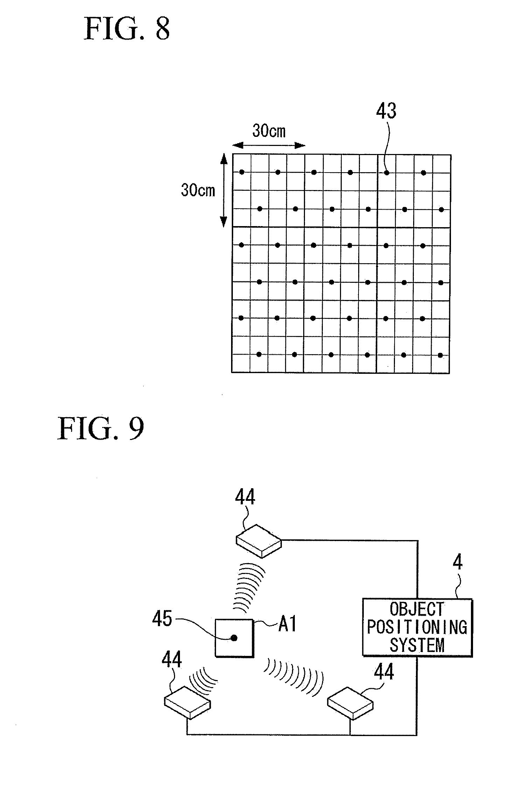

The second is a method called a radio frequency identification (RFID) floor sensor. FIG. 8 is a drawing that describes this method. As shown in FIG. 8, in this method, passive RFID tags 43 are disposed in the form of a matrix on the floor of a room. Also, although not illustrated, an RFID reader is attached to an anchored object.

The RFID reader reads the passive RFID tag 43 that is nearest, and transmits the RFID information showing the passive RFID tag 43 that was read to the object positioning system 4. The object positioning system 4 converts the position on the floor into coordinates, maps the RFID information and the floor coordinates, and stores them. Based on the received RFID information, the RFID reader acquires the position of the passive RFID tag 43 that was detected. Then, the position of the aforesaid anchored object is determined based on the acquired position.

The third is a method that uses active RFID tags. FIG. 9 is a drawing describing this method. As shown in FIG. 9, this method uses three access points 44. Also, an active RFID tag 45 is attached to the anchored object A1.

The active RFID tag 45 transmits radio waves at a specified timing. Each access point 44 receives the radio waves transmitted by the active RFID tag 45 and, based on the delay time from the aforesaid timing, calculates the distance to the active RFID tag 45. The object positioning system 4 acquires each calculated distance and calculates the active RFID tag 45 by the three-point measurement method. Then, based on the coordinates thus computed, the position of the anchored object A1 is calculated.

Below, the constitution of the spatial display device 1 shall be described in detail. Herein below are described constitutions relating to the positional relation acquisition process and constitutions relating to the target object position judgment process.

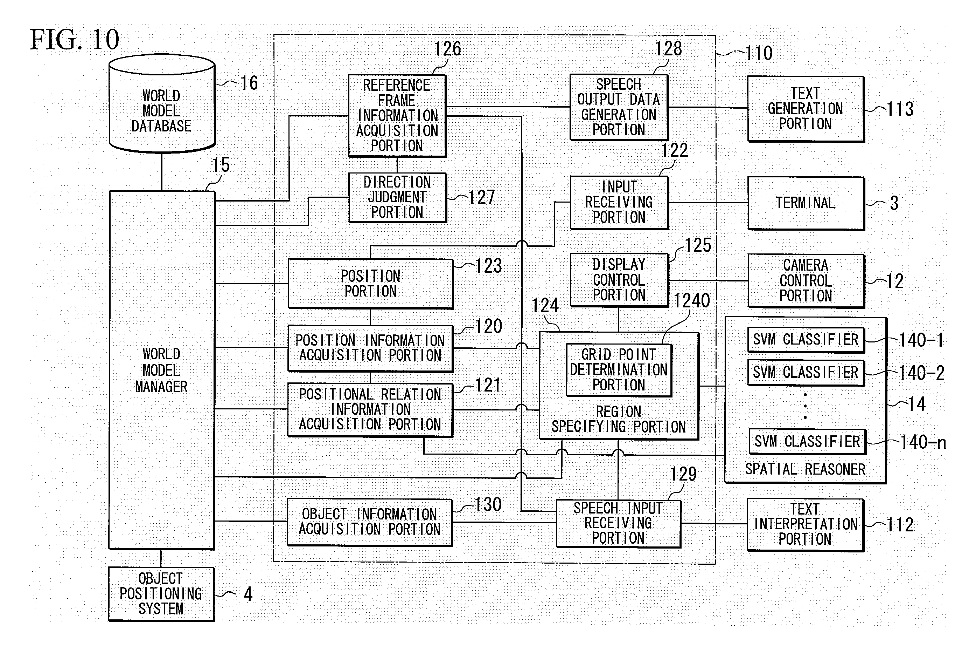

FIG. 10 shows the portions of the function blocks of the dialogue engine portion 110 that relate to the positional relation acquisition process. As shown in the drawing, the dialogue engine portion 110 is constituted to include a position information acquisition portion 120, a positional relation information acquisition portion 121, an input receiving portion 122, a positioning portion 123, a region specifying portion 124, a display control portion 125, a reference frame information acquisition portion 126, a direction judgment portion 127, a speech output data generation portion 128, a speech input receiving portion 129, and an object information acquisition portion 130. Also, the region specifying portion 124 is constituted to include therein a grid point determination portion 1240. Moreover, although not a function of the dialogue engine portion 110, the spatial reasoner 14 is constituted to include SVM classifiers 140-i (i = 1 to n).

The data that is stored in the world model database 16 shall be described first. The world model database 16 stores the two tables of an object table and a dictionary table.

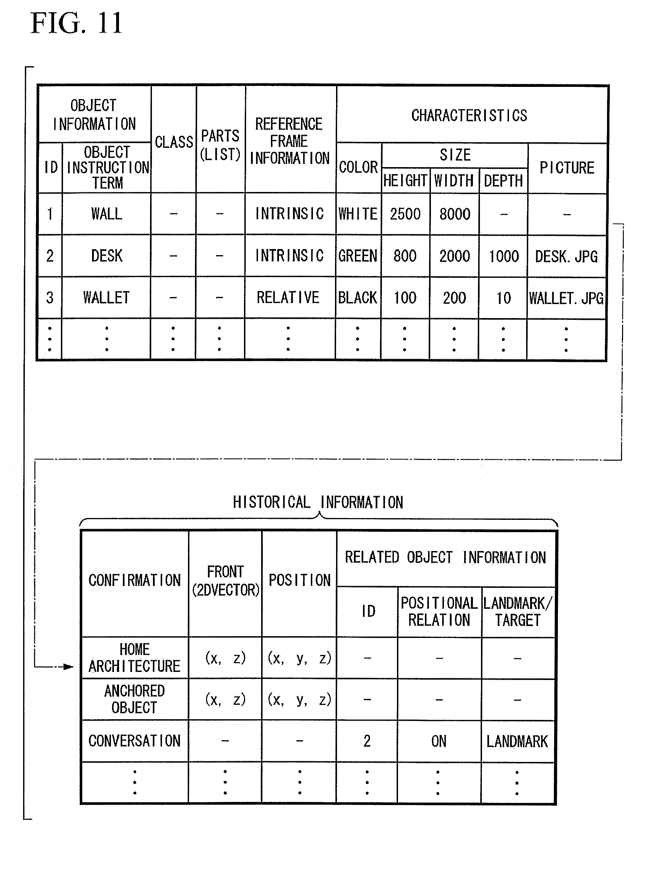

FIG. 11 shows an example of the object table. As shown in the figure, the object table is a table that stores, for one or a plurality of objects, object information describing the object, reference frame information indicating the reference frame that serves as a basis when judging the positional relation with the object, class information that shows the classification when classifying objects by the concept of superior order; part information showing whether or not the object is a part of another object, characteristic information showing the size etc. of the object, confirmation information showing the reliability of the object existing in the room, front information showing the "front" direction intrinsic to the object (direction information showing the direction of an object), position information showing the position of the object, and related object information showing another object related to the given object. Here, the object information consists of an ID and object instruction term, the characteristic information consists of color data, size data (height data, width data, and depth data), and photographic data, and the related object information consists of an ID, positional relation information, and object classification information. Also, among each type of information, the confirmation information, front direction information, position information, and related object information are historical information in which each history thereof is accumulated.

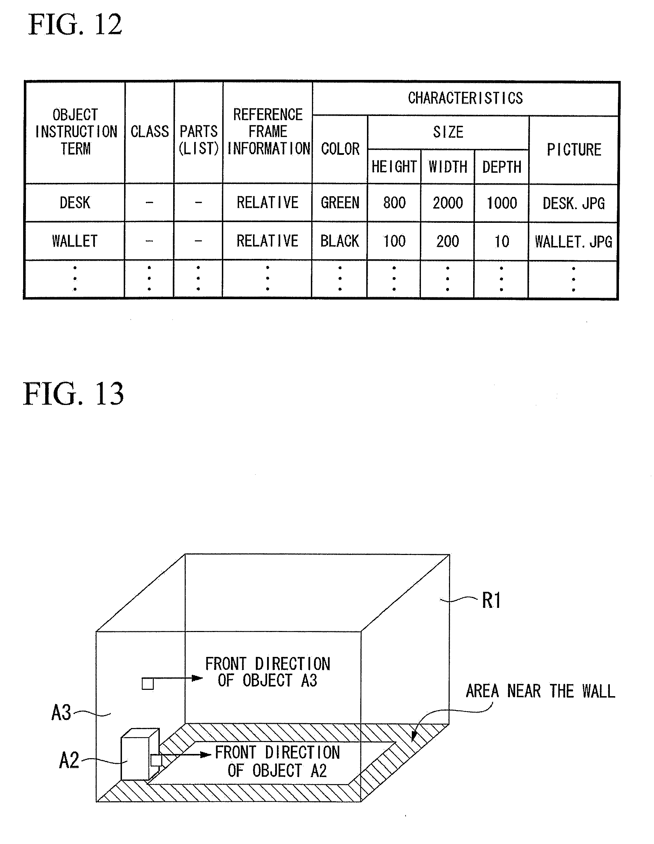

Also, FIG. 12 is a drawing showing an example of a dictionary table. As shown in the drawing, the dictionary table is a table that stores class information, part information, reference frame information, and characteristic information including color data, size data, and photographic data for one or a plurality of object instruction terms.

In the present embodiment, objects that exist in a room are classified into three types. The first is a home architecture object, and corresponds to a ceiling, floor, wall, column, door and the like. The second is an anchored object, being relatively large and immobile furniture such as a table, television, sofa, refrigerator, and the like and corresponds to the objects written in the object table in advance. The third covers other objects that are neither a home architecture object nor an anchored object.

In the present embodiment, object information, class information, part information, reference frame information, characteristic information, confirmation information, front direction information, and position information for home architecture are written in advance in the object table. In the example of FIG. 11, the wall of ID = 1 is an example of home architecture.

Also, object information, class information, part information, reference frame information, characteristic information, confirmation information, and position information for an anchored object are written in advance in the object table. In the example of FIG. 11, the desk of ID = 2 is an example of an anchored object.

The spatial display device 1 computes the front direction information of an anchored object as follows. FIG. 13 is a drawing for describing the computation process. In the example shown in the drawing, an object A2 "fridge" is placed in a room R1. Normally, a refrigerator is placed with its back up against a wall. Therefore, the reference frame information acquisition portion 122 can assume that the front direction of an object A3 "wall" is the front direction information of the object A2 "fridge". However, in order to ensure that the object A2 "fridge" is placed against a wall, the reference frame information acquisition portion 122 confirms that the object A2 "fridge" is positioned near (with a specified distance) a wall of the room R1 based on the position information of the object A2 "fridge", and position information and size data of each wall of the room R1 including the object A3 "wall". Moreover, it is preferable to confirm that the wall with which the object A2 "fridge" is in contact with among the walls is the object A3 "wall", and then assume that the front direction of the object A3 "wall" is the front direction of the object A2 "fridge".

For the other objects, the spatial display device 1 appropriately writes each information in the object table based on utterances of the user.

In a specific example, first the user utters a word that corresponds to the "object knowledge" shown in Table 1. Here, the phrase is the aforementioned "The sofa is red." Upon receiving this, the text interpretation portion 112 produces internal knowledge representation data ISA ("sofa", "red"), and outputs it to the speech input receiving portion 129. The speech input receiving portion 129, based on the input data ISA ("sofa", "red"), acquires an object instruction term "sofa" that indicates the object and color data "red" that indicates the color and outputs to the object information acquisition portion 130. The object information acquisition portion 130 confirms whether or not an entry of the object instruction term "sofa" and the color data "red" have been input in the object table via the world model manager 15. Here, if there is no entry, the object information acquisition portion 130 gives the instruction to store the object instruction term "sofa" and the color data "red" to the world model manager 15.

When the world model manager 15 receives this instruction, it first generates an ID for the object. Then, the object instruction term "sofa" and the color data "red" are made to be stored in the object table in association with the ID. Moreover, the world model manager 15, among the information that is not instructed from the world model database corresponding portion 120 (here, the size data and reference frame information, etc.), stores in the object table, in association with the ID, the information that is stored in association with the object instruction term "sofa" in the dictionary data. In addition, the world model manager 15 sets the confirmation information of the aforesaid ID to "conversation". The confirmation information "conversation" indicates that the corresponding object is an object whose existence is shown only by conversation with the user.

The specific process for acquiring the positional relation between the landmark object and the target object shall be described below.

First, the position information acquisition portion 120 acquires the landmark object position information, which shows the position of the landmark object, and the target object position information, which shows the position of the target object. Then, the positional relation information acquisition portion 121, based on the landmark position information and the target object position information acquired by the position information acquisition portion 120, acquires the positional relation information showing the positional relation between the landmark object and the target object.

The process of the position information acquisition portion 120 shall first be described in detail below, followed by the process of the positional relation information acquisition portion 121.

First the process of the position information acquisition portion 120 shall be described. The position information acquisition portion 120 acquires the landmark object position information from the object table and instructs the position of the target object to the user on the projection image that is displayed in the screen 31, whereby the target object position information is acquired.

More specifically, the speech input receiving portion 129 receives the input of the positional relation instruction term that shows the positional relation between the landmark object and the target object. For example, assuming the user asks "Is there the trash box on the desk?", the speech input receiving portion 121 receives the input of the data STATE ("trash box", "desk", "on", "now"), and outputs it to the region specifying portion 124 (see "Spatial Expression" in Table 1.). In this example, the object "desk" is the landmark object, and the object "trash box" is the target object, while "on" is the positional relation instruction term.

Also, in a separate example, assuming the user asks, "Is there the trash box to the left of the desk?", the speech input receiving portion 121 receives the input of the data STATE ("trash box", "desk", "left", "now"), and outputs it to the region specifying portion 124 (see "Spatial Expression" in Table 1.). In this example, the object "desk" is the landmark object, and the object "trash box" is the target object, while "left" is the positional relation instruction term.

The region specifying portion 124 specifies the region in the room that is in the positional relation with the landmark object indicated by the aforesaid positional relation instruction term. Specifically, the grid point determination portion 1240, based on the landmark object position information, determines a plurality of grid points (position) around the landmark object. Then, the spatial reasoner 14 judges, for each grid point determined by the grid point determination portion 1240, whether the grid point and the position indicated by the landmark object position information are in the positional relation shown by the aforesaid positional relation instruction term.

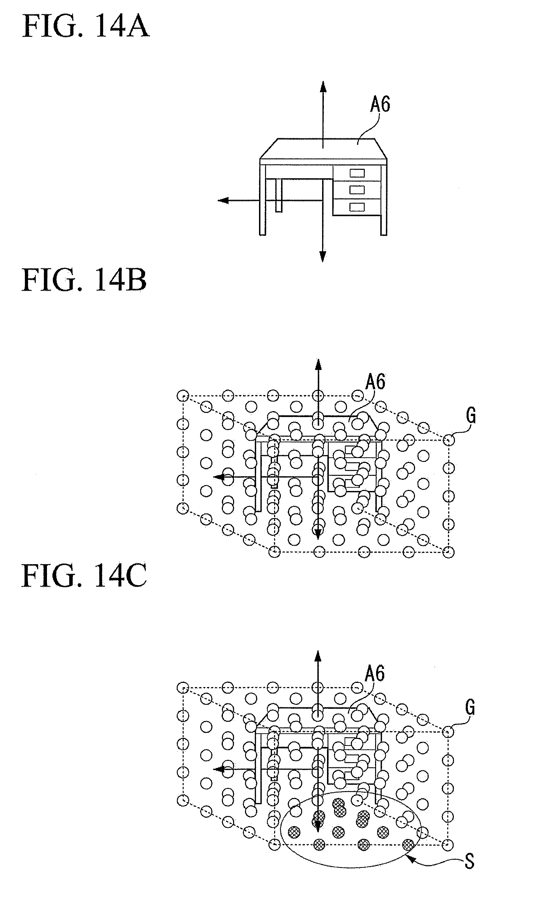

FIGS. 14(a) and 14(b) are drawings for describing a plurality of grid points determined in this way. In FIG. 14A, object A6 "desk" is shown as a landmark object. As shown in FIG. 14B, the grid point determination portion 1240 determines grid points at a specified interval within a specified range around the object A6 "desk".

Here, the aforesaid specified range and the aforesaid specified interval of the grid points are preferably determined based on the size data of the landmark object and the size data of the target object. For example, the aforesaid specified range is preferably three times the maximum size (the maximum among the height, width, and depth) of the landmark object. In addition, the aforesaid specified interval is preferably the same as the maximum size (the maximum among the height, width, and depth) of the target object. In addition, the aforesaid specified range and the aforesaid specified interval may be determined based on the range of possible processing of the spatial reasoner 14 and the processing load state of the CPU.

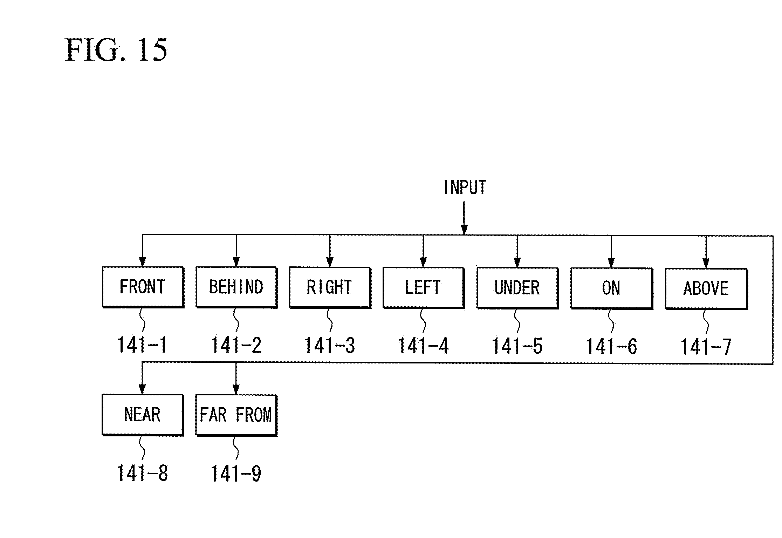

Here, the spatial reasoner 14 shall be described. The SVM classifiers 140-i for i = 1 to 9 included in the spatial reasoner 14 respectively correspond to positional relations that mutually differ. For example, one SVM classifier 140-i corresponds to "front", and another SVM classifier 140-i corresponds to "right". FIG. 15 shows specific examples. In the example of FIG. 15, nine SVM classifiers 140-i are prepared, respectively corresponding to the positional relation of front, behind, right, left, under, on, above, near, and far from.

Each SVM classifier 140-i receives the input of relative position information showing the relative positions of two objects, tilt angle information showing the tilt angle of the camera 2, and maximum size ratio information showing the maximum size ratio of the two objects (the ratio of the respective maximum among the height, width, and depth) and judges whether or not they are in a corresponding positional relation. Then it returns a judgment result of either "YES" or "NO".

The region specifying portion 124 outputs to the spatial reasoner 14 the relative position information showing the relative position of a grid point and the landmark object for each grid point that is determined by the grid point determination portion 1240, positional relation information that shows the positional relation thereof, the tilt angle information $\alpha$ that shows the viewpoint of the projection image, and the maximum size ratio information $RS$ showing the maximum size ratio of the target object and the landmark object.

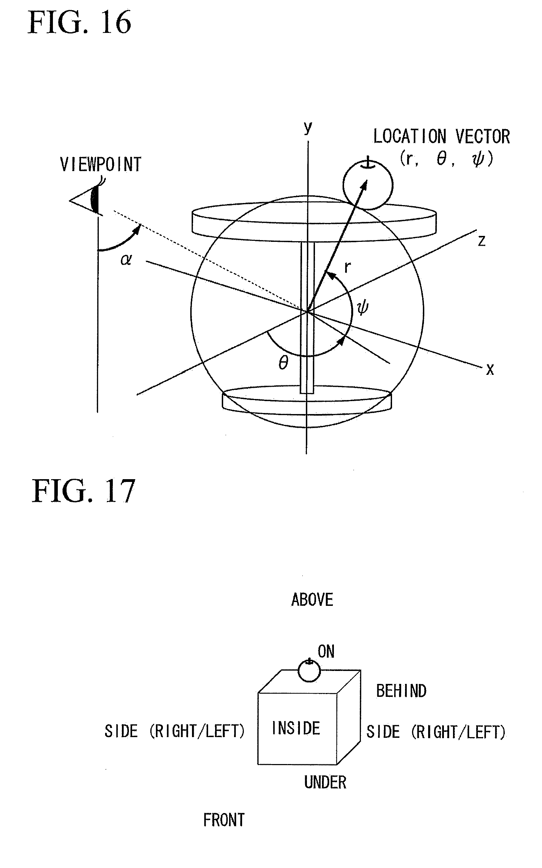

Here, the relative position information shall be explained in detail. FIG. 16 is a drawing for explaining the relative position information. The tilt angle information $\alpha$ is also illustrated in the same drawing. As shown in the drawing, the relative position information is expressed by location vector $(r, \theta, \psi)$, which consists of a relative length $r$, an angle of the location vector on the X-Z plane $\theta$, and an angle between X-Z plane and the location vector $\psi$. Each element of the location vector is computed by Eqs. (1) to (3), assuming the coordinates of the landmark object are $(x_1, y_1, z_1)$ and the coordinates of the grid point are $(x_2, y_2, z_2)$.

$$r = \sqrt{(x_2 - x_1)^2 + (y_2 - y_1)^2 + (z_2 - z_1)^2} \qquad (1)$$

$$\psi = \sin^{-1}((y_2 - y_1)/r)\frac{180}{\pi} \quad (\text{deg}) \qquad (2)$$

$$\text{if } z_2 - z_1 > 0 \text{ then}$$
$$\theta = \sin^{-1}(\eta)\frac{180}{\pi} \quad (\text{deg})$$
$$\text{else} \qquad (3)$$
$$\theta = 180 - \sin^{-1}(\eta)\frac{180}{\pi} \quad (\text{deg})$$

$\eta$ is expressed by Eq. (4) as follows.

$$\text{if } r\cos(\psi) > 0.001 \text{ then}$$
$$\eta = -\frac{x_2 - x_1}{r\cos(\psi)}$$
$$\text{else} \qquad (4)$$
$$\eta = -\frac{x_2 - x_1}{0.001}$$

The region specifying portion 124 normalizes the value computed by the above equations and inputs it to the spatial reasoner 14. Even for the tilt angle information, a value similarly normalized is input. This normalization is performed by Eqs. (5) to (8). Note that $L_{room}$ is the length of the longer of the width and depth of the room.

$$r\big/L_{room} \tag{5}$$

$$\theta\big/180 \tag{6}$$

$$\psi\big/180 \tag{7}$$

$$\alpha\big/180 \tag{8}$$

Here, a specific example of the relative position information, tilt angle information, maximum size ratio information, and positional relation information shall be presented. In this example, the landmark object is a "desk", the target object is an "apple", with their positions respectively being (x, y, z) = (10.0 m, 0.5 m, 14.0 m), (x, y, z) = (10.0m, 1.05m, 15.0m). In this case, $(r, \theta, \psi)$ = (1.141 m, 0.0 deg, 28.8 deg). Also, $\alpha$ is, as an example, 75 deg. Moreover, RS is given by the apple's maximum size / the desk's maximum size, so that if the apple's maximum size is 0.1 m, and the desk's maximum size is 10.0 m, RS = 0.01. Also, the positional relation information is "on".

Upon receiving these values, the spatial reasoner 14 inputs the relative position information, tilt angle information, maximum size ratio information to the SVM classifier 140-i that corresponds to the positional relation indicated by the input positional relation information. Then the judgment result that is thus obtained is output to the region specifying portion 124. The region specifying portion 124 acquires this judgment result for each grid point, and judges whether or not each grid point and the position of the land mark object are in the positional relation shown by the aforesaid positional relation instruction term.

The region specifying portion 124, in accordance with this judgment result, specifies a region in the room. Specifically, it specifies a region in the room by the position of the aforesaid landmark object and one or a plurality of grid points that is/are judged to be in the positional relation shown by the aforesaid positional relation instruction term.

FIG. 14C is a drawing showing an example of the region specified as described above, with the positional relation indicated by the aforesaid positional relation instruction term being "front". In the same drawing, the lattice pattern grid points also show those grid points judged as "YES" by the SVM classifier 140-i, with the specified region S being constituted by these grid points. As shown in the same drawing, the region S is mostly located in "front" of the object A6 "desk", which is the landmark object.

The spatial reasoner 14 shall here be described in further detail. The objective is to learn a mapping between spatial expression and physical region in a three-dimensional environment for recognizing a boundary of space which each spatial term occupies. See FIG. 17 below about "apple and box" as an example. The divided space depends on several conditions such as geometric relation of two objects, ratio of two objects' sizes, etc.

For dividing space and its learning from sample data, a SVM (support vector machine) is used due to its high performance. The key idea of SVMs is to separate two classes with the hyperplane that has a maximum margin. Finding this hyperplane $\omega \cdot \mathbf{x}_i + b = 0$ can be translated into the following optimization problem (9).

$$\text{minimize}: \frac{1}{2}\|\omega\|^2 + C\sum_{i=1}^{l}\xi_i \tag{9}$$

$$\text{subject to}: \xi_i \geq 0,\ y_i(\omega \cdot \mathbf{x}_i + b) \geq 1-\xi_i$$

where $\frac{1}{2}\|\omega\|^2$ is the maximum margin, $\xi_i$ is the learning error of a training pattern $i$, C is the trade-off between learning error and margin, $\mathbf{x}_i$ is the feature vector of a training pattern $i$, $y_i$ is the target value of a training pattern $i$, and $l$ is the number of training patterns, respectively.

Then, the feature vectors are mapped into an alternative space y choosing kernel $\mathbf{K}(\mathbf{x}_i,\mathbf{x}_j) = \varphi(\mathbf{x}_i)\cdot\varphi(\mathbf{x}_j)$ for nonlinear discrimination. Consequently, it leads to the following quadratic optimization problem (10). The function $\varphi$ is defined to map the feature vectors to an other higher dimension space, however, the dot product $\varphi(\mathbf{x}_i)\cdot\varphi(\mathbf{x}_j)$ requires extreme high order of vector calculation. Therefore, in order to avoid the dot product calculation, here the Kernel function $\mathbf{K}(\mathbf{x}_i,\mathbf{x}_j)$ is introduced in the SVM manner as called Kernel trick. Then we don't need to care about existence of the mapping function $\varphi$ eventually.

$$\text{minimize}: \mathbf{W}(\alpha) = -\sum_{i=1}^{l}\alpha_i + \frac{1}{2}\sum_{i=1}^{l}\sum_{j=1}^{l}\mathbf{y}_i\mathbf{y}_j\alpha_i\alpha_j\mathbf{K}(\mathbf{x}_i,\mathbf{x}_j)$$

$$(10)$$

$$\text{subject to}: \sum_{i=1}^{l}\mathbf{y}_i\alpha_i = 0, \forall_i : 0 \leq \alpha_i \leq C$$

where $\alpha$ is a vector of $l$ variables and each component $\alpha_i$ corresponds to a training pattern $(x_i, y_i)$. The solution of the optimization problem is the vector $\alpha^*$ for which $\mathbf{W}(\alpha)$ is minimized and the constraints of Eq. (10) are fulfilled. The classification of an unknown pattern $\mathbf{z}$ is made based on the sign of the function:

$$\mathbf{G}(\mathbf{z}) = \sum_{i:SV}\alpha_i\mathbf{y}_i\mathbf{K}(\mathbf{x}_i,\mathbf{z}) + b \qquad (11)$$

The target value of segmentation points is set as 1 and that of non-segmentation points as -1. The separating hyperplane is obtained by solving the optimization problem shown in Eq. (11) for training patterns.

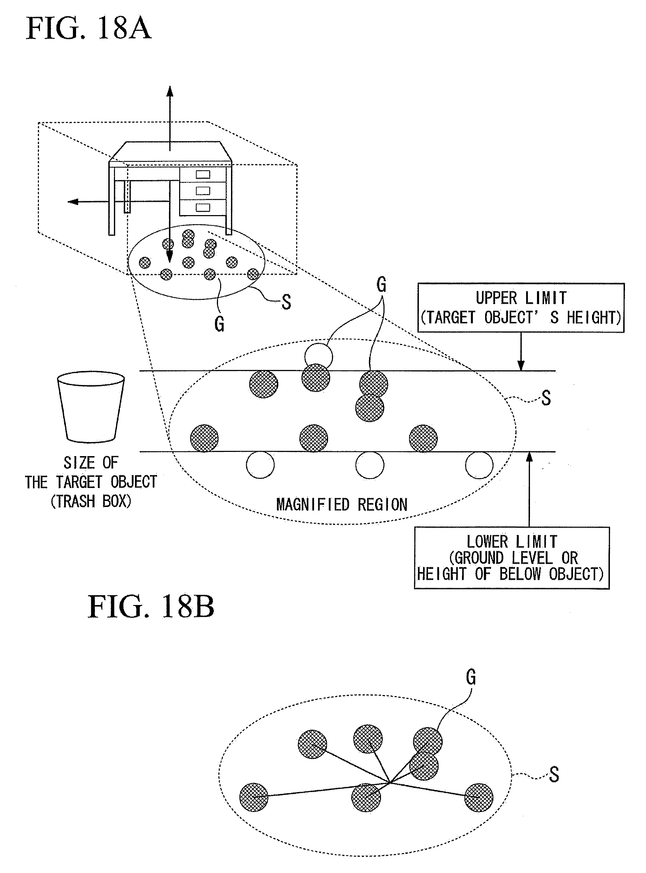

By specifying the region in the above manner, the region specifying portion 124 additionally performs processing to compute the center of gravity of a set of the grid points contained in the specified region. FIG. 18A, 18B are drawings for describing the center of gravity computation process. As shown in FIG. 18A, the region specifying portion 124 first selects the grid points in the region S. Note that those grid points that are clearly unusual as positions of the target object are removed from the selection result. Specifically, that at a position exceeding the height of the target object and those located under the floor are excluded. Then, with the coordinates of each selected grid point being $(x_p, y_p z_p)$ (p = 1 to n), the coordinates of the center of gravity(FIG 18B) $(x_{C.G.}, y_{C.G.}, z_{C.G.})$ are calculated by Eq. (12) to (14).

$$x_{C.G.} = \frac{\sum_{p=1}^{n}x_p}{n} \qquad (12)$$

$$y_{C.G.} = \frac{\sum_{p=1}^{n}y_p}{n} \qquad (13)$$

$$z_{C.G.} = \frac{\sum_{p=1}^{n} z_p}{n} \qquad (14)$$

The display control portion 125 displays on the screen 31 the projection image consisting of the specified image projected on a two-dimensional plane. Specifically, instructions are issued to the camera control portion 12 to control the direction of the camera 2 so that the aforementioned coordinates ($x_{C.G.}$, $y_{C.G.}$, $z_{C.G.}$) of the center of gravity are brought to the center of the projection image. Upon receiving these instructions, the camera control portion 12 controls the pan and tilt of the camera 2.

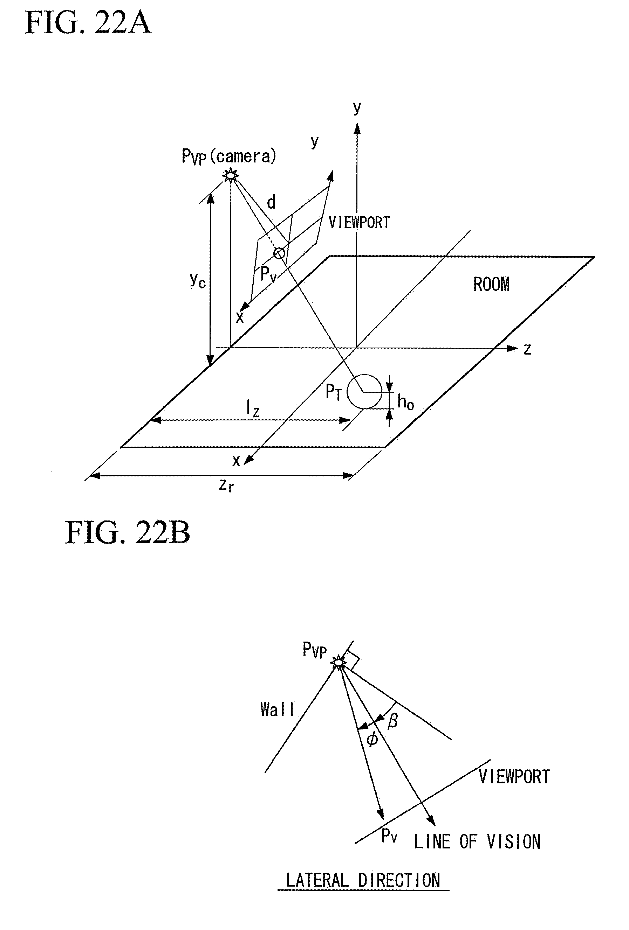

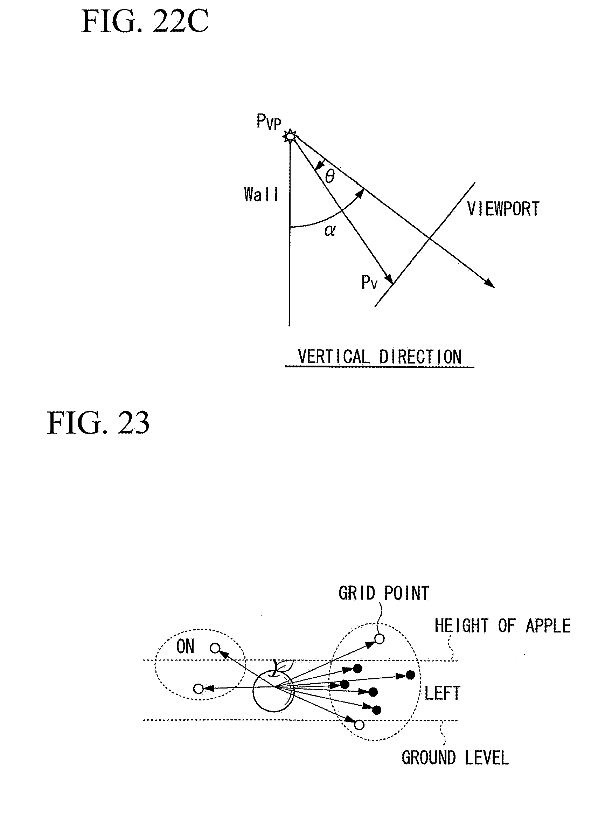

More specifically, the display control portion 125 converts the aforementioned coordinates ($x_{C.G.}$, $y_{C.G.}$, $z_{C.G.}$) of the center of gravity into two-dimensional coordinates on the projection image that is currently displayed using Eq. (15) and Eq. (16) given below, and controls the direction of the camera 2 so that the two-dimensional coordinates serve as the origin in the projection image. The parameters included in Eq. (15) and Eq. (16) shall be explained in the subsequent description of FIG. 22A, 22B, 22C (when describing the conversion from two-dimensional coordinates to three-dimensional coordinates).

$$x_v = d \tan\left( -\beta + \tan^{-1} \frac{x_T}{l_z} \right) + \frac{w_v}{2} \qquad (15)$$

$$y_v = d \tan\left( \alpha - \tan^{-1} \frac{l_z}{y_{VP}} \right) + \frac{h_v}{2} \qquad (16)$$

When the region specifying portion 124 specifies a region in the above manner, the region cannot be correctly specified if the correspondence relation of the positional relation with the positional relation instruction term is unclear. For example, depending on the selection of either of a correspondence relation based on the positional relation specific to a first object (for example, assuming a "desk", then the side with a drawer would be the "front", and, facing the drawer, the left side would be the "right", and similarly the right side would be the "left". Herein below, this correspondence relation is called the "intrinsic reference frame".) or a correspondence relation based on the positional relation in the case of viewing from the viewpoint of the projection image (for example, assuming a "desk", the position closest to the viewpoint would be the "front", and, facing the "front", the left side would be the "left", and the right side would be the "right". Herein below, this correspondence relation is called the "relative reference frame".) the specification result will differ. As a result, instances will occur in which the aforementioned coordinates ($x_{C.G.}$, $y_{C.G.}$, $z_{C.G.}$) of the center of gravity does not correctly express the position of the target object. In such a case, even if the direction of the camera 2 is controlled by the camera control portion 12 so that the aforementioned coordinates ($x_{C.G.}$, $y_{C.G.}$, $z_{C.G.}$) of the center of gravity are brought to the center of the projection image, the target object will not be located in the vicinity of the center of the projection image.

Therefore, reference information that shows the reference frame to be used is stored for each object in the object table (and thus serves as a basis when judging the positional relation with the object). This reference frame information is set to the "relative reference frame" for all objects in the default state (dictionary table). However, the reference frame information acquisition portion 126 detects when the user has performed an operation corresponding to designation of the reference frame information, and based on this detected operation, acquires and updates the reference frame information. Based on this updated reference frame information, the region specifying portion 124 corrects the computed coordinates ($x_{C.G.}$, $y_{C.G.}$, $z_{C.G.}$) of the center of gravity.

Below, the reference frame information and the processing performed by the reference frame information acquisition portion 126 shall first be described in detail, followed by a description of the process of correcting the coordinates ($x_{C.G.}$, $y_{C.G.}$, $z_{C.G.}$) of the center of gravity.

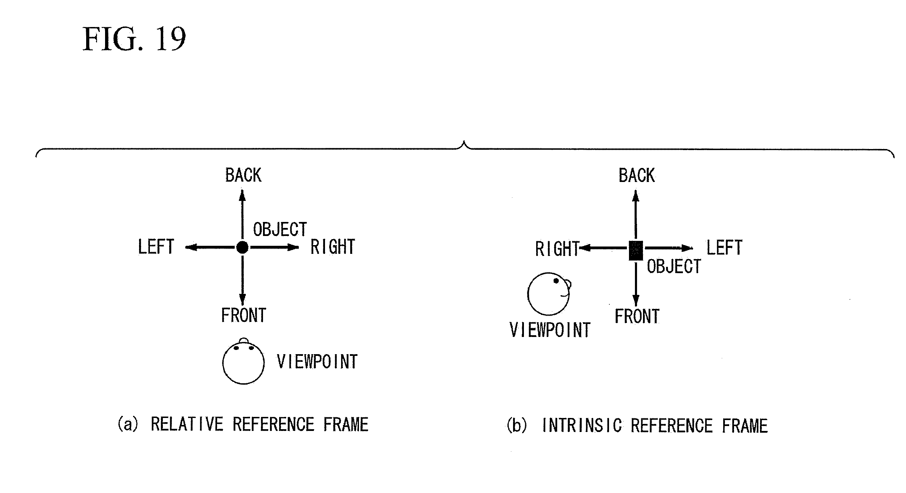

First, the reference frame information shall be explained in concrete terms. FIG. 19 is a drawing for describing the reference frame information. In the drawing, (a) shows the positional relation for an object whose reference frame information is "relative reference frame", while (b) is a drawing that shows the positional relation for an object whose reference frame information is "intrinsic reference frame". The "view point" shown in the drawing is the viewpoint of the projection image. As shown in (a), for objects whose reference frame information is "relative reference frame", the "left", "right", "front", and "back" are determined from the viewpoint of the projection image. On the other hand, as shown in (b), for objects whose reference frame information is "intrinsic reference frame", the "left", "right", "front", and "back" are determined in advance in relation to the "front" that is intrinsic to the object.

As a premise for obtaining the reference frame information, it is necessary to store the front direction information of the object for which the reference frame information is to be acquired (referred to as the reference frame information acquisition target object) in the object table. The reference frame information acquisition portion 122 judges whether or not the front direction information of the reference frame information acquisition target object is stored in the object table, and when it is stored, acquires the front direction information.

On the other hand, when it is not stored, the reference frame information acquisition portion 122 performs a process for acquiring the front direction information of the reference frame information acquisition target object. Specifically, the reference frame information acquisition portion 122 asks a question to the user such as "What does the (reference frame information acquisition target object) face to?". In more concrete terms, it instructs the speech output data generation portion 128 to generate the internal knowledge representation ASK_OBJ_FRONT ("reference frame information acquisition target object") that shows the question "What does the (reference frame information acquisition target object) face to?" (Refer to "Question" in Table 2.).

Upon receiving this instruction, the speech output data generation portion 128 generates the data ASK_OBJ_FRONT ("reference frame information acquisition target object"), and outputs it to the text generation portion 113. As a result, the question "What does the (reference frame information acquisition target object) face to?" is vocally output from the speaker 35 of the terminal 3. If the user responds by saying "The reference frame information acquisition target object faces to the sofa", then the internal knowledge representation data FRONT ("reference frame information acquisition target object", "sofa") is input from the text interpretation portion 112 to the speech input receiving portion 121 (refer to "Object front" in Table 1).

When data FRONT ("reference frame information acquisition target object", "sofa") is input, the reference frame information acquisition portion 126 judges that the reference frame information acquisition target object is facing the "sofa", and based on the three-dimensional position information $(x_1, y_1, z_1)$ that is stored in the object table for the object "sofa" and the three-dimensional position information $(x_2, y_2, z_2)$ that is stored in the object table for the reference frame information acquisition target object, generates a two-dimensional vector $(x_2 - x_1, y_2 - y_1)$ from the reference frame information acquisition target object to the object "sofa". Then, this two-dimensional vector $(x_2 - x_1, y_2 - y_1)$ is standardized to obtain the front direction of the reference frame information acquisition target object, which is then stored in the object table.

Now to return to the acquisition of reference frame information. First, the input receiving portion 122 receives the instruction input on the projection screen that designates at least one point within the region that is in the positional relation with the landmark object shown by the positional relation instruction term. Specifically, the instruction by the user of the position of the landmark object as described above corresponds to this. In this case, although the user instructs the position of the target object, at the same time the user instructs at least one point within the region that is in the positional relation with the landmark object shown by the positional relation instruction term. Also, the direction judgment portion 127 judges the direction of the landmark object based on the front direction information that is stored in the object table for the landmark object.

The reference frame information acquisition portion 126, in accordance with the judgment result of the direction judgment portion 127, based on the instruction input that is received by the input receiving portion 122 and the positional relation that is shown by the aforesaid positional relation instruction term, performs the acquisition of the reference frame information for the landmark object, maps the acquired reference frame information to the object information of the landmark object, and writes it to the object table.

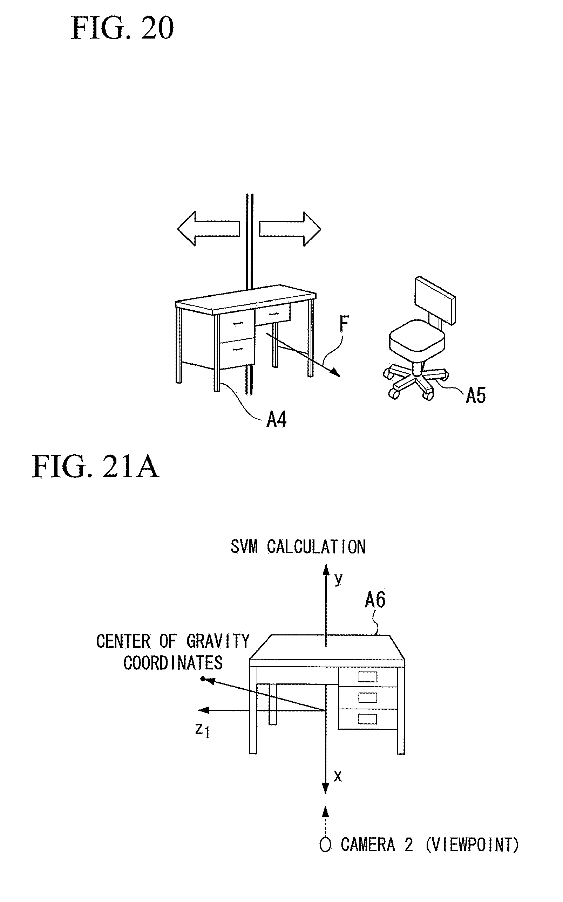

FIG. 20 is a drawing for describing in concrete terms the acquisition of such reference frame information. In the drawing, the object A4 "desk" is a reference frame information acquisition object, with the front direction F thereof indicated. Also, the drawing is from the viewpoint of the projection image. For example, when the user says, "The chair is to the left of the desk", and indicates the side region in the drawing where the object A5 "chair" is, the reference frame information of the object A4 "desk" becomes "intrinsic reference frame". On the other hand, when the user says, "The chair is to the right of the desk", and indicates the side region in the drawing where the object A5 "chair" is, the reference frame information of the object A4 "desk" becomes "relative reference frame".

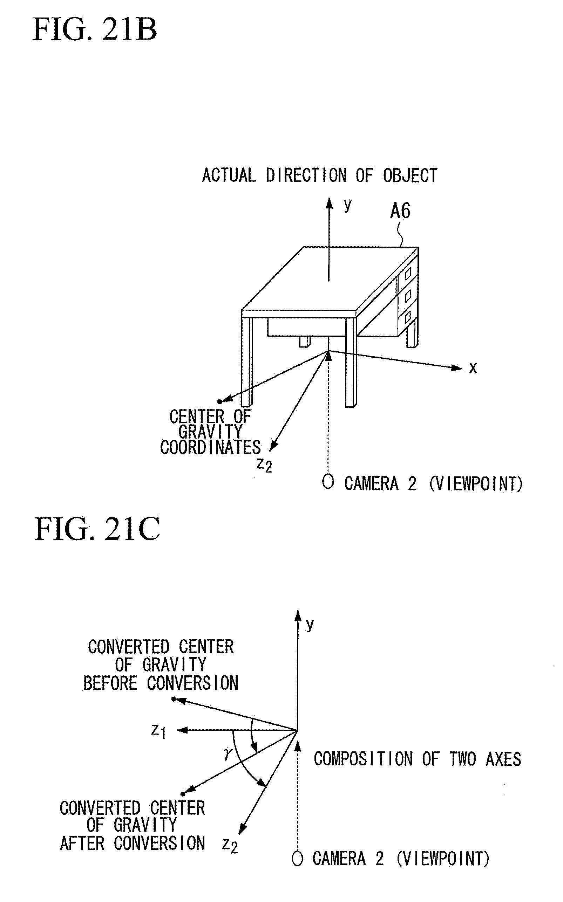

Below is explained the process of correcting the center of gravity coordinates $(x_{C.G.}, y_{C.G.}, z_{C.G.})$ as performed by the region specifying portion 124 based on the reference frame information thus acquired. FIG. 21A, 21B, 21C are drawings for describing this process. In the same drawings, the object A6 "desk" is a landmark object.

FIG. 21A is an image of the coordinate system used in the positional relation judgment process performed by each SVM classifier 140-i of the spatial reasoner 14. Conversely, FIG. 21B is an image of the coordinate system that treats the front direction intrinsic to the object A6 as the X-axis. As shown in the drawings, the coordinate system of the latter consists of the coordinate system of the former rotated about its Y-axis. Here, the rotation amount is $\gamma$.

When the reference frame information of the object A6 "desk" is "intrinsic reference frame", as shown in FIG. 21B, the position where the object A7 "trash box" exists is "left" of the object A6 "desk". In this case, when the user asks, "Is there the trash box to the left of the desk?", since the region specifying portion 124 calculates the center of gravity by FIG. 21A, the calculated center of gravity coordinates ($x_{C.G.}$, $y_{C.G.}$, $z_{C.G.}$) end up being positioned "behind" the object A6 "desk".

This is due to the coordinate systems differing by $\gamma$ in the "intrinsic reference frame" and the "relative reference frame". Therefore, the region specifying portion 124 rotates the center of gravity coordinates ($x_{C.G.}$, $y_{C.G.}$, $z_{C.G.}$) by $\gamma$ along the XZ plane, as shown in FIG 21C. Specifically, the coordinate values are converted by Eq. (17). Here, $x_s$ and $z_s$ are the X-axis and Z-axis coordinates of the center of gravity prior to conversion, while $x_a$ and $z_a$ are the X-axis and Z-axis coordinates of the center of gravity after conversion.

$$\begin{pmatrix} x_a \\ z_a \end{pmatrix} = \begin{pmatrix} \cos\gamma & -\sin\gamma \\ \sin\gamma & \cos\gamma \end{pmatrix} \begin{pmatrix} x_s \\ z_s \end{pmatrix} \qquad (17)$$

As a result of the aforementioned processing, the target object should be displayed on the projection image that is displayed on the screen 31. The user instructs the position of the target object on the screen 31 using the pointing device 34. The instruction input receiving portion 124 acquires the two-dimensional coordinates showing the position thus instructed and outputs them to the positioning portion 123.

In conjunction with controlling the direction of the camera 2, the position information acquiring portion 120 preferably asks questions in accordance with questions asked by the user (such as, "Is there the trash box to the left of the desk?"). For example, it generates a question such as, "Can you see the trash box there?" and, via the speech output data generation portion 128, presents it to the user. In more concrete terms, it instructs the speech output data generation portion 128 to generate the internal knowledge representation data ASK_OBJ_IN_SCENE ("target object") that presents the question "Can you see (target object) there?" (Refer to "Question" in Table 2.).

The speech output data generation portion 128 that receives this instruction generates the data ASK_OBJ_ IN_SCENE ("target object") and outputs it to the text generation portion 113. As a result, the question "Can you see (target object) there?" is vocally output from the speaker 35 of the terminal 3. Thereby, the user can know what to do.

Also, an answer of "No" by the user, for example, to this question (Refer to "Informative Reply" in Table 1.) means that the target object is not visible on the projection image. In this case, the position information acquisition portion 120 may cause the direction of the camera to be moved by the display control portion 125 and use the object recognition portion 13 to search the projection image for an object that matches the characteristic information stored in the object table for the target object. In the event of an object being found that resembles the target object as a result of the search, for example the question above may be repeated to the user.

The positioning portion 123 determines the position of the target object in the room by converting the two-dimensional coordinates that are input to three-dimensional coordinates. This is explained in concrete terms below.

FIG. 22A, 22B, 22C are drawings that describe the aforesaid coordinate conversion by the positioning portion 123. In the example shown in the drawings, the three-dimensional object position represents $P_T(x_T, y_T, z_T)$, and the viewpoint VP represents $P_{VP}(x_{VP}, y_{VP}, z_{VP})$, respectively, in the global coordinate. On the other hand, the two-dimensional object position represents $P_v(x_v, y_v)$ in the viewpoint coordinate, called a viewpoint, of the projection image. Also, the size of the viewpoint is (width, height) = ($w_v, h_v$). The distance between the viewpoint and the origin of the viewpoint is $d$. The horizontal distance between the viewpoint and the target object is $l_z$. The following Eqs. (18) to (23) explain the conversion.

$$\phi = \tan^{-1}\left( \frac{x_v - \dfrac{w_v}{2}}{d} \right) \qquad (18)$$

$$\theta = \tan^{-1}\left(\frac{y_v - \dfrac{h_v}{2}}{d}\right) \qquad (19)$$

$$l_z = y_{VP}\tan(\alpha - \theta) \qquad (20)$$

$$x_T = l_z\tan(\beta + \phi) \qquad (21)$$

$$y_T = \frac{h_O}{2} \qquad (22)$$

$$z_T = l_z - \frac{z_r}{2} \qquad (23)$$

Here, $h_0$ is the target object's height, $z_r$ is the depth length of the room, $\alpha$ is the tilt angle of the camera 2 from the vertical direction, $\beta$ is the pan angle of the camera 2 from the front direction. The origin of the two-dimensional coordinate is the center of the viewpoint, so that $\phi$ is the drift angle of x-axis of the viewpoint between the origin and the object position from the viewpoint. As same way, $\theta$ is the drift angle of y-axis of the viewpoint from the viewpoint VP.

If the target object X is on the other object Y, the object X's y position is (object Y's height) + (object X's height) /2. The positioning portion 123, based on the related object information that is stored in the object table, performs this computation. That is, when there is a related object for which the positional relation information is "on", this computation is performed.

The positioning portion 123 writes the position information of the target object that is thus determined in the object table via the world model manager 15. The world model manager 15 rewrites the confirmation information of the target object to "exist" when writing this position information. The confirmation information "exist" shows that the user has confirmed the position of the corresponding object.

The position information acquisition portion 120 acquires information showing the position of the target object determined by the positioning portion 123 as target object position information.

Next, the process of the positional relation information acquisition portion 121 shall be described. The positional relation information acquisition portion 121 obtains relative position information showing the relative position of the landmark object and the target object based on the landmark object position information and the target object position information acquired by the position information acquisition portion 120. Also, it acquires tilt angle information that shows the tilt angle of the camera 2. Moreover, it acquires maximum size ratio information showing the maximum size ratio of the target object and the landmark object. Then this information is output to the spatial reasoner 14.

The spatial reasoner 14, upon receiving these inputs, then inputs the relative position information, the tilt angle information, and the maximum size ratio information to all of the SVM classifiers 140-i. Each of the judgment results obtained as a result are output to the positional relation information acquisition portion 121.

The positional relation information acquisition portion 121, depending on the case, receives 0, 1, or 2 or more "YES" judgment results about a set of grid points around the landmark object. The positional relation information acquisition portion 121, based on these judgment results, determines one positional relation among a set of grid points. Specifically, the positional relation information acquisition portion 121, when there is only 1 "YES" detection result, treats the positional relation corresponding to that judgment result to the positional relation between the landmark object and the target object and acquires the positional relation information. On the other hand, in the case of 0 or 2 or more "YES" judgment results, as a result, the positional relation information acquisition portion 121 once again outputs the landmark object position information and the target object position information to the spatial reasoner 14 and causes it to output a judgment result.

The positional relation information acquisition portion 121 may also perform the following process. That is, the positional relation information acquisition portion 121 makes the region specifying portion 124 determine a plurality of grid points around the landmark object. Then, from among those grid points, it selects a specified number whose position is near the target object and makes all of the SVM classifiers 140-i perform the aforesaid judgment. Note that in this case, those grid points that exceed the height of the target object and those located under the floor are excluded from the selection result. The positional relation information acquisition portion 121 accumulates the number of SVM classifiers 140-i that gave out "YES" judgment results in the order from those near the target object for each positional relation. Then, the positional relation that reaches a specified number the earliest is treated as the positional relation between the landmark object and the target object, and the positional relation information may be acquired.

FIG. 23 is a drawing showing an example of this process. In the example shown in the drawing, the target object is an "apple". The positional relation information acquisition portion 121 first selects from a plurality of grid points nine grid points with positions near the target object "apple". Note that two among the nine are higher than the apple and so are excluded from the selection result. Also one among the nine is positioned under the floor and so excluded from the selection result. As a result, judgment is performed for six grid points in all the SVM classifiers 140-i. For five grid points, the SVM classifier 140-i corresponding to the positional relation "left" gives a judgment of "YES", and for one grid point, the SVM classifier 140-i corresponding to the positional relation "on" gives a judgment of "YES". The positional relation information acquisition portion 121, in the above manner, accumulates the number of SVM classifiers 140-i that gave out "YES" judgment results in the order from those near the target object for each positional relation, and in this case, the positional relation "left" reaches the specified number (here being five) the earliest. Therefore, the positional relation information acquisition portion 121 determines that the positional relation between the landmark object and the target object is "left", and acquires the positional relation information that shows "left".

The positional relation information acquisition portion 121 adds the positional relation information thus obtained to the object table as related object information of the target object. Subsequently, when for example the user asks the question, "Is there the trash box to the left of the desk?", the spatial display device 1 is able to generate a response based on the aforesaid related object information.

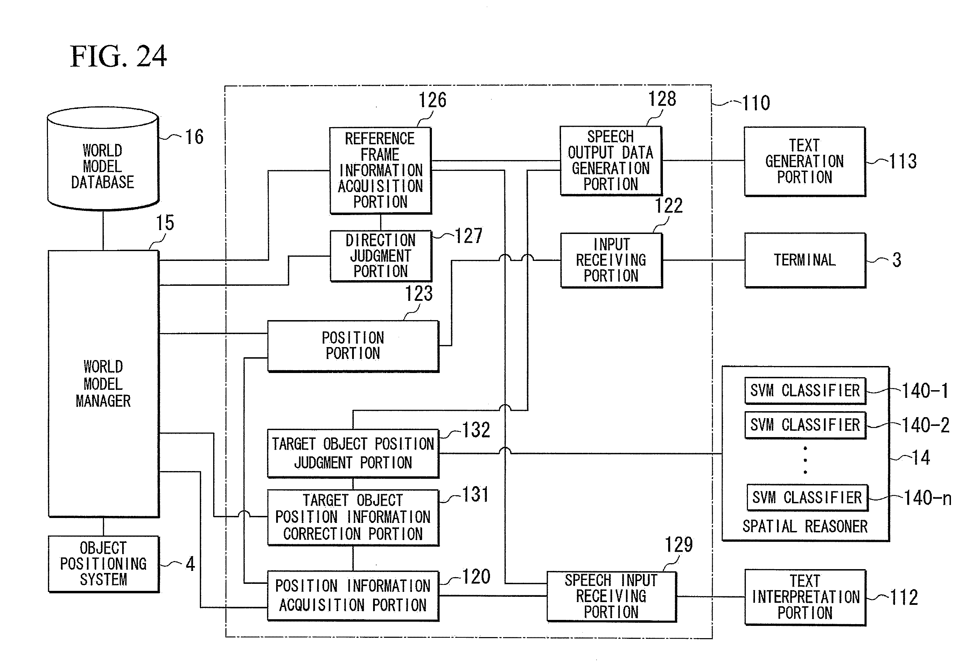

Next, FIG. 24 is a drawing that shows the portion related to the target object position judgment process, among the function blocks of the dialogue manager 110. As shown in the drawing, the dialogue manager 110 is constituted to include the position information acquisition portion 120, the input receiving portion 122, the positioning portion 123, the reference information acquisition portion 126, the direction judgment portion 127, the speech output data generation portion 128, the speech input receiving portion 129, the target object position information correction portion 131, and the target object position judgment portion 132.

The speech input receiving portion 129 receives the input of the positional relation instruction term showing the positional relation between the landmark object and the target object as discussed previously.

The position information acquisition portion 120 reads out the landmark object position information that shows the position of the landmark object and the target object position information showing the position of the target object from the object table.

The target object position judgment portion 132 acquires the relative position information showing the relative position of the landmark object and the target object based on the landmark object position information and the target object position information. In addition, it acquires the tilt angle information that shows the tilt angle of the camera 2 and the maximum size ratio information that shows the maximum size ratio of the landmark object and the target object, and outputs both the aforesaid relative position information and the aforesaid positional relation instruction term to the spatial reasoner 14. Then, based on the judgment result obtained as a result, it judges whether or not the landmark object and the target object are in the positional relation shown by the aforesaid positional relation instruction term.

In more concrete terms, first the target object position information correction portion 131 corrects the aforesaid target object position information based on the reference frame information stored in the object table for the landmark object and the direction of the viewpoint of the projection image. Then, the target object position judgment portion 132 acquires the aforesaid relative position information and outputs it to the spatial reasoner 14 together with the tilt angle information, the maximum size ratio information, and the aforesaid positional relation instruction term.

The spatial reasoner 14, as discussed previously, judges whether or not the landmark object and the target object are in the positional relation shown by the aforesaid positional relation instruction term based on the landmark object position information and the target object position information from the viewpoint of the projection image. Specifically, it performs judgment based on the landmark object position information and the target object position information by the SVM classifier 140-i for i =1 to n that corresponds to the positional relation shown by the aforesaid positional relation instruction term, and returns the judgment result to the target object position judgment portion 132.

The target object position judgment portion 132 judges whether or not the landmark object and the target object are in the positional relation shown by the aforesaid positional relation instruction term based on the returned judgment result.

The aforesaid correction process by the target object position information correction portion 131 shall be described in detail here. The specification of a region with a positional relation instruction term cannot be accurately performed when the correspondence relation of the positional relation with the positional relation instruction term is unclear. This situation is the same as the case of region specification by the region specifying portion 124. As a result, even when the target object is on the "left" of the landmark object in for example the "intrinsic reference frame", it is possible for the judgment result returned to the target object position judgment portion 132 to be to the "front" of the landmark object. Therefore, the position of the target object is oriented with the "relative reference frame" by the correction process of the target object position information correction portion 131.

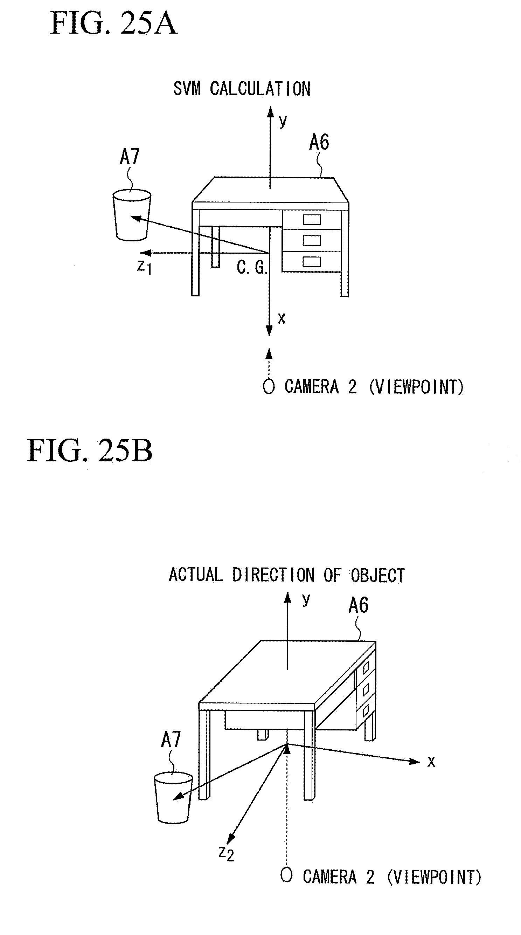

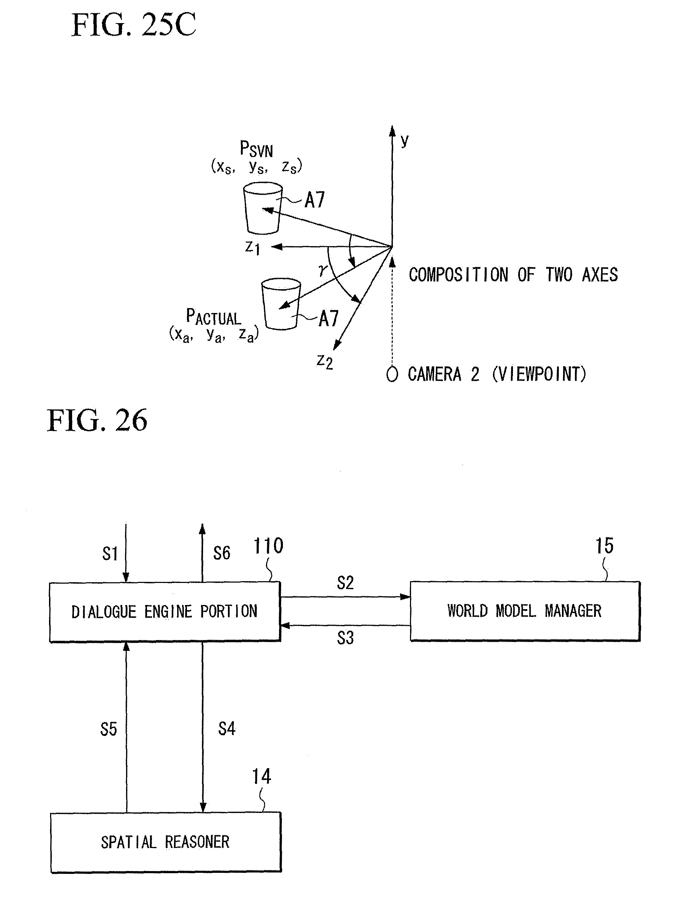

An explanation shall now be given referring to FIG. 25A, 25B, 25C. FIG. 25A, 25B, 25C are drawings for explaining the correction of target object position information by the target object position information correction portion 131. In the drawings, the object A6 "desk" is the landmark object, while the object A7 "trash box" is the target object.

FIG. 25A is an image of the coordinate system used in the positional relation judgment process performed by each SVM classifier 140-i of the spatial reasoner 14. FIG. 25B is an image of the coordinate system that treats the front direction intrinsic to the object A6 as the X-axis. As shown in the drawings, the coordinate system of the latter consists of the coordinate system of the former rotated about its Y-axis. Here, the rotation amount is $\gamma$.

When the reference frame information of the object A6 "desk" is "intrinsic reference frame", as shown in FIG. 25B, it is correct that the position where the object A7 "trash box" exists is "left" of the object A6 "desk". However, the spatial reasoner 14 ends up performing detection of the positional relation assuming the position where the object A7 "trash box" exists in FIG. 25B is to the "front" of the object A6 "desk". As a result, the judgment result returned from the spatial reasoner 14 to the target object position judgment portion 132 is mistaken.

This is due to the coordinate systems differing by $\gamma$ in the "intrinsic reference frame" and the "relative reference frame". Therefore, the target object position information correction portion 131 rotates the position of the object A7 "trash box" on the X-Z plane by $\gamma$ in advance, as shown in FIG. 25C. Specifically, the coordinate values are converted by Eq. (24). Here, $x_s$ and $z_s$ are the X-axis and Z-axis coordinates of the position of the object A7 "trash box" prior to conversion, while $x_a$ and $z_a$ are the X-axis and Z-axis coordinates of the object A7 "trash box" after conversion.

$$\begin{pmatrix} x_a \\ z_a \end{pmatrix} = \begin{pmatrix} \cos\gamma & -\sin\gamma \\ \sin\gamma & \cos\gamma \end{pmatrix} \begin{pmatrix} x_s \\ z_s \end{pmatrix} \qquad (24)$$

The target object position judgment portion 132 generates a reply based on the judgment result. Specifically, when it is judged that the landmark object and the target object are in the positional relation shown by the aforesaid positional relation instruction term, an affirmatively worded response is generated (for example, "Yes, it is there.") (Refer to "Informative Replay" of Table 2.). On the other hand, when it is judged that the landmark object and the target object are not in the positional relation shown by the aforesaid positional relation instruction term, a negatively worded response is generated (for example, "No, it isn't there."). The target object position judgment portion 132 presents to the user a response that is thus generated via the speech output data generation portion 128.

The description above covered the case of the position information acquisition portion 120 being able to acquire the target object position information, but acquisition may not be possible when the information is not stored in the object table. In this case, the spatial display device 1 performs a process for obtaining the target object position information (the process of the position information acquisition portion 120 described above) and displays the region shown by the landmark object and the positional relation instruction term on the projection image. Thereby, even while the position of the target object is unknown, processing to display the region where the target object seems to be is performed (the process of the display control portion 125 described above).

The process according to the embodiment described above is explained below with more concrete examples.

FIG. 26 is an outline block drawing that shows only the dialogue manager 110, the world model manager 15, and the spatial reasoner 14 among the components of the spatial display device 1. The numbers is parentheses show the order of the processing. An explanation follows referring to FIG. 26.

In the present example, first the dialogue engine portion 110 receives from the user the question, "Is there the table to the left of the fridge?" (step S1). Then, the dialogue engine portion 110 lets the target object be "table" and the landmark object be "fridge" and acquires the respective positions and sizes from the world model manager 15 (steps S2 and S3).

Once the position of the target position has been acquired in step S3, the dialogue engine portion 110 acquires the relative position information, tilt angle information, maximum size ratio information, and positional relation information (in this case "left"), and outputs them to the spatial reasoner 14 (step S4).

The spatial reasoner 14 inputs the relative position information, tilt angle information, and maximum size ratio information to the SVM classifier 140-i that corresponds to the positional relation "left", and outputs the judgment result of YES/NO obtained as a result to the dialogue engine portion 110 (step S5).

The dialogue engine portion 110 judges whether or not the target object "table" and the landmark object "fridge" are in the positional relation "left" based on the judgment result that has been input. Then, based on that judgment result, the dialogue engine portion 110 generates a response to the aforesaid question and presents it to the user (step S6). Specifically, when the judgment result is "YES", it generates a response of "Yes, it is there", and when the judgment result is "NO", it generates a response of "No, it isn't there" and presents it to the user.

When the position of the target object cannot be acquired in step S3, the dialogue engine portion 110 specifies a region that corresponds to "the left of the fridge" in the aforementioned question. Specifically, a plurality of grid points are set around the landmark object "fridge" and the relative position information (relative position information of the landmark object "fridge" and the grid points), tilt angle information, maximum size ration information, and positional relation information (in this case "left") are acquired for each grid point, and output to the spatial reasoner 14 (step S4).

Then, the dialogue engine portion 110 acquires the center of gravity coordinates of one or a plurality of grid points for which the judgment result input from the spatial reasoner 14 is affirmative and aligns the direction of the camera 2. Moreover, the dialogue engine portion 110 generates a question such as "Can you see the table there?" and presents it to the user to prompt the user to instruction the position of the target object. When an instruction is made, the position of the target object is acquired based on the instruction and stored in the object table.

Next, the process according to the present embodiment explained above is divided into phases and explained in more concrete terms. In the following explanation, the process of the spatial display device 1 is classified into the three phases of initial state, collecting object info without object recognition, and interaction phase with object recognition.

In the initial state, the following information is installed: 1) the room's geometry (span, depth, height), 2) fixed camera's position, 3) anchored object's position, 4) general knowledge database of objects (object components, product information, attributes (shape, color, size), object relationship, etc.). In this phase, the objects that are stored in the object table are only home architecture and anchored objects (table, TV, sofa, furniture, wall, etc.).

In the phase of collecting object information without object recognition, the spatial display device 1 collects object information by interacting with the user. The following are examples of the user's utterances: "My stapler is in the desk", "The radio is to the left of the TV", "The CD player is next to the radio", "My guitar is to the left of the furniture", "I put the book on the bookshelf", "The pillow is on the sofa", "I left my camera on the table", and "The house plant is behind of the sofa." In this phase, the estimated (ranged) position of the following objects is stored to the object database as a possible object (the confirmation information in the object table being set to "conversation"). Once the object is subsequently recognized by the user on video, it will be registered as a confirmed object with specific time and attributes (in the object table, the confirmation information is set to "exist").

In the interaction phase with object recognition, the user outside the house wants to know the location of object X (e.g., wallet) at home, looking at his cell phone's monitor screen. An example of a process in this phase is explained below referring to the flowchart.

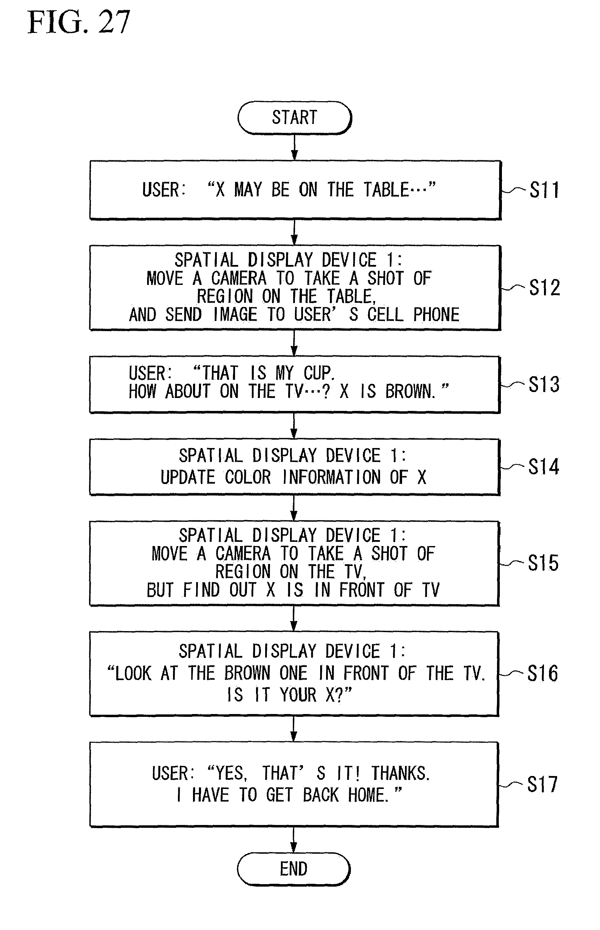

FIG. 27 is a drawing showing the flow of the process example in the interaction phase with object recognition. As shown in the same drawing, in this example, first the user makes an inquiry, "X may be on the table..." (step S11). Here, assuming the position of the object "X" is not stored in the object table, the spatial display device 1, upon receiving this inquiry, moves the camera 2 to display the region corresponding to the top of the table on the projection image (step S12).

The user confirms the projection image thus displayed and says, "That is my cup. How about on the TV...? X is brown." (step S13). The spatial display device 1, receiving the phase "X is brown", updates the color information of "X" in the object table (step S 14). Also, the spatial display device 1 moves the camera 2 to display the region corresponding to the top of the TV on the projection image (step S15). However, at this juncture the spatial display device 1 finds an object that is likely "X" (specifically, an object that matches the characteristic information of "X" as stored in the object table) in front of the TV by scanning the projection image.

Then, the spatial display device 1 moves the camera 2 so that the front of the TV is displayed on the projection image, generates the question, "Look at the brown one in front of the TV Is it your X?", and presents it to the user (step S16). The user confirms this and says, "Yes, that's it! Thanks. I have to get back home." (step S17), and the series of processes ends.

In this series of processes, the spatial display device 1 temporarily stores the ID of the object "table" and the positional relation information "on" as related object information of the object "wallet" and "brown" as the color information in the object table. At this stage, the confirmation information is "conversation". Then, the ID of the object "table" and the positional relation information "on" are finally stored in the object table as related object information of the object "cup". Also, the spatial display device 1 stores the ID of the object "TV" and the positional relation information "front" as related object information of the object "wallet" and "brown" as the color information in the object table. Since the existence is confirmed by the user, the confirmation information becomes "exist".

As explained above, since the spatial display device 1 initially acquires the position of each object and acquires the positional relation information that shows the positional relation between the objects, a precise answer can be given to a question (for example, "Is there a trash box to the left of the desk?") uttered by a person based on the positional relation between the two objects

Also, the spatial display device 1 can acquire the second (target) object position information based on the instruction of the user. In this case, since the spatial display device 1 can display a projection image that shows the position where the second object likely is based for example on a positional relation instruction term uttered by the user, instruction by the user of the position of the second object is facilitated. Moreover, the region specifying portion 124, by means of the determination for each grid point, can specify a region in the three-dimensional space that is in the positional relation with the first (landmark) object shown by the positional relation instruction term (the position where the second object likely is).

Also, the spatial display device 1 stores the reference frame information (information that indicates the correspondence relation to be selected) and specifies the position in the three-dimensional space to be displayed based on that correspondence relation. Therefore, errors in the specification result due to the wrong reference frame selection are eliminated.

Also, the spatial display device 1 can accurately reflect the intention of the user in the reference frame information to be stored in the object table.

Also, since the spatial display device 1 can judge the positional relation of two objects by the spatial reasoner 14, a precise answer can be given to a question (for example, "Is there a trash box to the left of the desk?") uttered by a person based on the positional relation between the two objects.

Moreover, since the spatial display device 1 stores the reference frame information (the information that indicates the correspondence relation to be selected) and inputs the second object position information to the spatial reasoner 14 after correction based on the reference frame information of the first object, it is possible to obtain a correct judgment result.

The spatial display device 1 overcomes current problems by bringing in learning of experience of human spatial recognition. The SVM can start on-line learning to adapt to a user's tendency or environmental characteristics, too.

More concretely, based on two techniques, the object positioning system and camera monitoring, spatial display device 1 realizes a fusion approach of spatial reasoning method with support by user's utterance and sophisticated learning technique, and develops a new way of man-machine communication.

Four examples are given below as specific applications of the present invention.

The first example is an application example to a room, which was given in the embodiment above. By using the method which the invention provides, an intelligent terminal having a camera and conversational capability can recognize actual objects with humans in order to create a map of the environment and localize humans' location. It will be used for an intelligent agent technology in a ubiquitous house to support everyday life as a majordomo. Humans can access by a cell phone or a personal computer to control a camera equipped in a remote place.

This kind of application will be applied for any small space such as an office, store, restaurant, school room, factory and so on. The target place of this embodiment is any place which requires monitoring or remote-accessing. The general condition for this embodiment is that the system and the user can share information of objects in everyday life.

The second example is an application to a video game. Interactive media using computer graphics, such as game consoles, mobile-type games (Nintendo-DS™, etc.), arcade-type amusement systems, utilize this invention in order to change the system's viewpoint by only vocal conversation. The system updates the CG image depending on the user's verbal request. It is a great possibility to enhance and augment media's the ability as well as degree of amusement. For this kind of application, the system doesn't need to have any information connected to the real environment. All of graphical scenes can be controlled as a virtual world inside the computer software.

An interesting application is to let the characters (human, animal, and any moving entities) move inside the virtual world by talking to the system (or the character). It only required to inform the destination, and then the character moves to that place. The conversational interface is the easiest way for humans so that it would be a very enjoyable application.

The third example is an outdoor application. A geographical observation system can utilize this invention. When a remote-camera is installed outside such as a street, sightseeing place, station, etc. and the locative information (such as GPS information) of noticeable objects such as large buildings, road signs, stores, etc., is provided, this invention can be applied. In the near future, when planned ubiquitous society is realized, such kind of locative information can be easily provided in public. People can access the remote-camera on the Internet and control the camera's direction by verbally describing prominent objects that are displayed. This kind of information is interesting especially for virtual sightseeing with actual scenes (video screen).

The fourth application is to the field of intelligent robotics. Recently, many home robots and moving intelligent robots are being studied. Some robots such as Wakamaru (Trade Mark of Mitsubishi Heavy Industries, Co., Ltd.) have been already sold. This invention can be implemented to such robots which have a camera, self-positioning capability and conversation capability, and move around collaborating with an object positioning system in the room. People can talk to the robot to ask the position of objects and the robot can tell the position in spatial terms. For this kind of application, the camera's viewpoint is changed continuously so that the robot needs to calculate the object position viewed from the user's position. Therefore, the user's position should be measured by some ways such as a room camera, the robot's camera, a positioning system using the user's PDA or mobile phone. The core idea in this invention can be applied as a mechanism to connect spatial terms to physical position.

The present invention is not restricted to these embodiments or the aforedescribed application examples and can be modified within a range that does not depart from the spirit of the present invention.

Also, a program for realizing the functions of the spatial display device 1 may be recorded on a computer-readable storage medium, and so by causing the program recorded on the storage medium to be read into a computer system and executed, the aforementioned processes may be performed.

"Computer system" here may refer to components including an operating system and hardware such as peripheral devices. Also, in the case of using a World Wide Web system, "computer system" may include an environment providing a home-page (or display environment).

Also, "computer-readable storage medium" refers to a storage device such as a flexible disk, magneto-optical disk, ROM, writable nonvolatile memory such as flash memory, portable media such as CD-ROM, and a hard disk that is housed in a computer system.

Moreover, "computer-readable storage medium" includes one that maintains a program for a specified time, such as volatile memory (for example, Dynamic Random Access Memory (DRAM)) in a computer system that consists of a server and client in the case of a program that is transmitted via a network such as the Internet or a communication line such as telephone lines.

Also, the aforementioned program may be transmitted from a computer system that stores this program in a storage device via a transmission medium or transmission waves in the transmission medium to another computer system. Here, a "transmission medium" that transmits the program refers to a medium that has a function to send information, such as a network like the Internet, or a communication line such as telephone lines.

Moreover, the aforementioned program may be one for realizing a portion of the aforedescribed functions. Moreover, it may be a differential file (differential program) that can realize the aforedescribed functions by combination with a program that is already recorded in a computer system.

**Claims**

1. A spatial display device that displays a projection image consisting of a three-dimensional space projected on a two-dimensional plane, comprising:

   a position information acquisition portion that acquires a first object position information that shows a position of a first object in said three-dimensional space and a second object position information that shows a position of a second object in said three-dimensional space; and
   a positional relation information acquisition portion that acquires positional relation information that shows the positional relation in said three-dimensional space between said first object and said second object based on the first object position information and the second object position information acquired by said position information acquisition portion.

2. The spatial display device according to claim 1, wherein said position information acquisition portion acquires said second object position information by having the user instruct the position of said second object on said projection image.

3. The spatial display device according to claim 2, further comprising:

   an input receiving portion that receives an input of a positional relation instruction term that shows the positional relation in said three-dimensional space between said first object and said second object;
   a region specifying portion that specifies a region in said three-dimensional space that is in the positional relation with said first object shown by said positional relation instruction term; and
   a display control portion that displays a projection image that consists of the region specified by said region specifying portion projected on said two-dimensional plane,

wherein said position information acquisition portion acquires said second object position information by having the user indicate the position of said second object on said projection image that is displayed by said display control portion.

**4.** The spatial display device according to claim 3, **characterized by**:

said region specifying portion including a grid point determination portion that determines a plurality of grid points based on said first object position information, and

said spatial display device including a grid point position judgment portion that judges whether or not each of the grid points determined by said grid point determination portion and the position shown by said first object position information are in the positional relation in said three-dimensional space shown by said positional relation instruction term, and

said region specifying portion specifying a region in said three-dimensional space in accordance with each judgment result of said grid point position judgment portion for each grid point determined by said grid point determination portion.

**5.** The spatial display device according to claim 4, further comprising:

a reference frame information storage portion that associates and stores first object information that shows said first object and reference frame information that shows a reference frame to serve as a basis when judging the positional relation with the first object,

wherein said region specifying portion specifies the position in said three-dimensional space that represents one or a plurality of grid points for which the judgment result of said grid point position judgment portion is affirmative based on the reference frame information stored in said reference frame information storage portion for said first object and the direction of the viewpoint of said projection image, and

said display control portion displays said projection image based on said position specified by said region specifying portion.

**6.** The spatial display device according to claim 5, further comprising:

a direction judgment portion that judges the direction of said first object; and

a reference frame information acquisition portion that, in accordance with the judgment result of said direction judgment portion, performs acquisition of said reference frame information for said first object based on the position of said second object indicated by an instruction of the user and said positional relation indicated by said positional relation instruction term and writes the reference frame information to said reference frame information storage portion.

**7.** A spatial display device that displays a projection image consisting of a three-dimensional space projected onto a two-dimensional plane, comprising:

an input receiving portion that receives an input of a positional relation instruction term that shows the positional relation in said three-dimensional space between a first object and a second object;

a position information acquisition portion that acquires a first object position information that shows a position of said first object and a second object position information that shows a position of said second object;

a spatial reasoner that analyzes whether or not said first object and said second object are in the positional relation in said three-dimensional space shown by said positional relation instruction term based on said first object position information and said second object position information; and

a second object position judgment portion that judges whether or not said first object and said second object are in the positional relation shown by said positional relation instruction term based on the judgment result of said spatial reasoner.

**8.** The spatial display device according to claim 7, further comprising:

a reference frame information storage portion that associates and stores first object information that shows said first object and reference frame information that shows a reference frame to serve as a basis when judging the positional relation with the first object, and

a second object position information correction portion that corrects said second object position information that is acquired by said position information acquisition portion based on the reference frame information stored in said reference frame information storage portion for said first object and the direction of the viewpoint of said projection image,

wherein said spatial reasoner, viewing from the viewpoint of said projection image, judges whether or not said first object and said second object are in the positional relation in said three-dimensional space shown by said positional relation instruction term based on said first object position information and said second object position information, and said second object position judgment portion inputs said first object position information and said second object position information after correction by said second object position information correction portion to said spatial reasoner and judges whether or not said first object and said second object are in the positional relation shown by said positional relation instruction term based on the judgment result obtained as a result.

9. A spatial display method for displaying a projection image consisting of a three-dimensional space projected onto a two-dimensional plane, the method comprising:

a position information acquisition step that acquires a first object position information that shows a position of a first object in said three-dimensional space and a second object position information that shows a position of a second object in said three-dimensional space, and

a positional relation information acquisition step that acquires positional relation information that shows the positional relation in said three-dimensional space between said first object and said second object based on the first object position information and the second object position information acquired in said position information acquisition step.

10. A program for causing a computer to act as a spatial display device that displays a projection image consisting of a three-dimensional space projected onto a two-dimensional plane, causing said computer to further function as:

a position information acquisition portion that acquires a first object position information that shows a position of a first object in said three-dimensional space and a second object position information that shows a position of a second object in said three-dimensional space, and

a positional relation information acquisition portion that acquires positional relation information that shows the positional relation in said three-dimensional space between said first object and said second object based on the first object position information and the second object position information acquired by said position information acquisition portion.

# FIG. 1

EP 1 923 772 A1

EP 1 923 772 A1

FIG. 2

# FIG. 3

USER CURSOR FOR POINTING

SYSTEM CURSOR FOR POINTING

SCREEN FOR
VIDEO STREAM

TEXT CHAT

31a

33a

35a

34a

32a

3a

# FIG. 4

33b    35b    USER CURSOR FOR POINTING

SYSTEM CURSOR FOR POINTING

INPUT TEXT AND OUTPUT TEXT

Hello,Where is my

31b

34b

3b

32b

FIG. 5

EP 1 923 772 A1

## FIG. 6

## FIG. 7

OBJECT POSITIONING SYSTEM ~4

CEILING

ULTRASONIC

FIG. 8

FIG. 9

FIG. 10

WORLD MODEL DATABASE ~16

REFERENCE FRAME INFORMATION ACQUISITION PORTION  126

SPEECH OUTPUT DATA GENERATION PORTION  128

110

TEXT GENERATION PORTION ~113

15

DIRECTION JUDGMENT PORTION ~127

INPUT RECEIVING PORTION  122

TERMINAL ~3

WORLD MODEL MANAGER

POSITION PORTION ~123

DISPLAY CONTROL PORTION  125

CAMERA CONTROL PORTION ~12

POSITION INFORMATION ACQUISITION PORTION ~120

GRID POINT DETERMINATION PORTION  124  1240

SVM CLASSIFIER ~140-1

SVM CLASSIFIER ~140-2

POSITIONAL RELATION INFORMATION ACQUISITION PORTION ~121

REGION SPECIFYING PORTION

14

SVM CLASSIFIER ~140-n

SPATIAL REASONER

OBJECT INFORMATION ACQUISITION PORTION ~130

SPEECH INPUT RECEIVING PORTION  129

TEXT INTERPRETATION PORTION ~112

OBJECT POSITIONING SYSTEM ~4

EP 1 923 772 A1

33

# FIG. 11

| OBJECT INFORMATION | | CLASS | PARTS (LIST) | REFERENCE FRAME INFORMATION | CHARACTERISTICS | | | | |
|---|---|---|---|---|---|---|---|---|---|
| ID | OBJECT INSTRUCTION TERM | | | | COLOR | SIZE | | | PICTURE |
| | | | | | | HEIGHT | WIDTH | DEPTH | |
| 1 | WALL | – | – | INTRINSIC | WHITE | 2500 | 8000 | – | – |
| 2 | DESK | – | – | INTRINSIC | GREEN | 800 | 2000 | 1000 | DESK. JPG |
| 3 | WALLET | – | – | RELATIVE | BLACK | 100 | 200 | 10 | WALLET. JPG |
| : | : | : | : | : | : | : | : | : | : |

HISTORICAL INFORMATION

| CONFIRMATION | FRONT (2DVECTOR) | POSITION | RELATED OBJECT INFORMATION | | |
|---|---|---|---|---|---|
| | | | ID | POSITIONAL RELATION | LANDMARK/ TARGET |
| HOME ARCHITECTURE | (x, z) | (x, y, z) | – | – | – |
| ANCHORED OBJECT | (x, z) | (x, y, z) | – | – | – |
| CONVERSATION | – | – | 2 | ON | LANDMARK |
| : | : | : | : | : | : |

## FIG. 12

| OBJECT INSTRUCTION TERM | CLASS | PARTS (LIST) | REFERENCE FRAME INFORMATION | CHARACTERISTICS | | | | | |
|---|---|---|---|---|---|---|---|---|---|
| | | | | COLOR | SIZE | | | PICTURE | |
| | | | | | HEIGHT | WIDTH | DEPTH | | |
| DESK | – | – | RELATIVE | GREEN | 800 | 2000 | 1000 | DESK. JPG | |
| WALLET | – | – | RELATIVE | BLACK | 100 | 200 | 10 | WALLET. JPG | |
| ⋮ | ⋮ | ⋮ | ⋮ | ⋮ | ⋮ | ⋮ | ⋮ | ⋮ | |

## FIG. 13

FRONT DIRECTION OF OBJECT A3

AREA NEAR THE WALL

FRONT DIRECTION OF OBJECT A2

R1

A3

A2

EP 1 923 772 A1

# FIG. 14A

# FIG. 14B

# FIG. 14C

36

# FIG. 15

INPUT

| FRONT | BEHIND | RIGHT | LEFT | UNDER | ON | ABOVE |
|-------|--------|-------|------|-------|-----|-------|
| 141-1 | 141-2 | 141-3 | 141-4 | 141-5 | 141-6 | 141-7 |

| NEAR | FAR FROM |
|------|----------|
| 141-8 | 141-9 |

EP 1 923 772 A1

# FIG. 16

VIEWPOINT

LOCATION VECTOR
$(r, \theta, \psi)$

y

z

$\alpha$

$r$

$\psi$

$\theta$

x

# FIG. 17

ABOVE

ON

BEHIND

SIDE (RIGHT/LEFT)

INSIDE

SIDE (RIGHT/LEFT)

UNDER

FRONT

## FIG. 18A

UPPER LIMIT
(TARGET OBJECT'S HEIGHT)

SIZE OF
THE TARGET OBJECT
(TRASH BOX)

MAGNIFIED REGION

LOWER LIMIT
(GROUND LEVEL OR
HEIGHT OF BELOW OBJECT)

## FIG. 18B

# FIG. 19

(a) RELATIVE REFERENCE FRAME

(b) INTRINSIC REFERENCE FRAME

## FIG. 20

## FIG. 21A

SVM CALCULATION

CENTER OF GRAVITY
COORDINATES

CAMERA 2 (VIEWPOINT)

FIG. 21B

ACTUAL DIRECTION OF OBJECT

FIG. 21C

# FIG. 22A

# FIG. 22B

LATERAL DIRECTION

# FIG. 22C

VERTICAL DIRECTION

# FIG. 23

# FIG. 24

## FIG. 25A

SVM CALCULATION

## FIG. 25B

ACTUAL DIRECTION OF OBJECT

## FIG. 25C

P$_{SVN}$
(x$_s$, y$_s$, z$_s$)

A7

z$_1$

γ

P$_{ACTUAL}$
(x$_a$, y$_a$, z$_a$)

A7

z$_2$

y

COMPOSITION OF TWO AXES

O CAMERA 2 (VIEWPOINT)

## FIG. 26

S1    S6    110

DIALOGUE ENGINE PORTION

S2

S3

15

WORLD MODEL MANAGER

S5    S4    14

SPATIAL REASONER

# FIG. 27

```
                        ┌──────────┐
                        │  START   │
                        └────┬─────┘
                             │
                             ▼
      ┌─────────────────────────────────────────────┐
      │   USER:  "X MAY BE ON THE TABLE···"          │──── S11
      └──────────────────────┬──────────────────────┘
                             │
                             ▼
      ┌─────────────────────────────────────────────┐
      │        SPATIAL DISPLAY DEVICE 1:             │
      │   MOVE A CAMERA TO TAKE A SHOT OF            │──── S12
      │          REGION ON THE TABLE,               │
      │   AND SEND IMAGE TO USER'S CELL PHONE        │
      └──────────────────────┬──────────────────────┘
                             │
                             ▼
      ┌─────────────────────────────────────────────┐
      │   USER:  "THAT IS MY CUP.                    │
      │   HOW ABOUT ON THE TV···? X IS BROWN."       │──── S13
      └──────────────────────┬──────────────────────┘
                             │
                             ▼
      ┌─────────────────────────────────────────────┐
      │        SPATIAL DISPLAY DEVICE 1:             │
      │     UPDATE COLOR INFORMATION OF X            │──── S14
      └──────────────────────┬──────────────────────┘
                             │
                             ▼
      ┌─────────────────────────────────────────────┐
      │        SPATIAL DISPLAY DEVICE 1:             │
      │   MOVE A CAMERA TO TAKE A SHOT OF            │──── S15
      │          REGION ON THE TV,                  │
      │   BUT FIND OUT X IS IN FRONT OF TV          │
      └──────────────────────┬──────────────────────┘
                             │
                             ▼
      ┌─────────────────────────────────────────────┐
      │        SPATIAL DISPLAY DEVICE 1:             │
      │ "LOOK AT THE BROWN ONE IN FRONT OF THE TV.  │──── S16
      │          IS IT YOUR X?"                     │
      └──────────────────────┬──────────────────────┘
                             │
                             ▼
      ┌─────────────────────────────────────────────┐
      │   USER: "YES, THAT'S IT! THANKS.            │
      │   I HAVE TO GET BACK HOME."                  │──── S17
      └──────────────────────┬──────────────────────┘
                             │
                             ▼
                        ┌──────────┐
                        │   END    │
                        └──────────┘
```

**EP 1 923 772 A1**

European Patent Office

**EUROPEAN SEARCH REPORT**

Application Number

EP 06 30 1152

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | C. KEMKE, R. GALKA, M. HASAN: "Towards an Intelligent Interior Design System" WORKSHOP "INTELLIGENT VIRTUAL DESIGN ENVIRONMENTS (IVDES)", AT THE SECOND INTERNATIONAL CONFERENCE ON DESIGN COMPUTING AND COGNITION (DCC-06), [Online] 9 July 2006 (2006-07-09), pages 1-13, XP002431923 Retrieved from the Internet: URL:http://www.cs.umanitoba.ca/~ckemke/pap ers/DCC-IVDEs-Kemke-extended.pdf> [retrieved on 2007-05-03] * the whole document * | 1-6,9,10 | INV. G06F3/01 G06F17/27 |
| Y | | 7,8 | |
| X | US 2004/044441 A1 (GUPTA RAKESH [US] ET AL) 4 March 2004 (2004-03-04) * paragraph [0003] - paragraph [0007] * * paragraph [0039] - paragraph [0044]; figure 6 * * paragraph [0072]; figure 11 * | 1,7-10 | |
| D,Y | TAKENOBU TOKUNAGA ET AL.: "Bridging the gap between language and action" LECTURE NOTES IN COMPUTER SCIENCE - IVA 2003 : INTELLIGENT VIRTUAL AGENTS, vol. 2792, 15 September 2003 (2003-09-15), - 17 September 2003 (2003-09-17) pages 127-135, XP002431924 ISBN: 3-540-20003-7 | 7,8 | TECHNICAL FIELDS SEARCHED (IPC) G06F |
| A | * the whole document * | 5,6 | |
| | -/-- | | |

The present search report has been drawn up for all claims

| Place of search | Date of completion of the search | Examiner |
|---|---|---|
| The Hague | 3 May 2007 | LEGRAND, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 06 30 1152

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PERZANOWSKI D; SCHULTZ A C; ADAMS W; MARSH E; BUGAJSKA M: "Building a multimodal human-robot interface" IEEE INTELLIGENT SYSTEMS, vol. 16, no. 1, January 2001 (2001-01), pages 16-21, XP002431925 ISSN: 1094-7167 * page 17 - page 18; figures 3,4 * | 2,3 | |
| A | KENNEDY K ET AL: "Approximate spatial reasoning using vague object boundaries" ELECTRICAL AND COMPUTER ENGINEERING, 1993. CANADIAN CONFERENCE ON VANCOUVER, BC, CANADA 14-17 SEPT. 1993, NEW YORK, NY, USA,IEEE, 14 September 1993 (1993-09-14), pages 1258-1261, XP010118201 ISBN: 0-7803-1443-3 * page 1259, right-hand column - page 1260; figure 2 * | 4 | |
| D,A | MUKERJEE A: "Neat vs Scruffy: A survey of Computational Models for Spatial Expressions"[Online] 1998, XP002431926 Retrieved from the Internet: URL:http://citeseer.ist.psu.edu/250615.htm l> [retrieved on 2007-05-03] * the whole document * | 1-10 | TECHNICAL FIELDS SEARCHED (IPC) |
| D,A | KLAUS-PETER GAPP: "Basic Meanings of Spatial Relations: Computation and Evaluation in 3D Space" SONDERFORSCHUNGSBEREICH 314 - KÜNSTLICHE INTELLIGENZ - WISSENBASIERTE SYSTEME - BERICHT NR. 101, April 1994 (1994-04), XP002431927 Saarbrücken, Germany ISSN: 0944-7814 * the whole document * | 1-10 | |

The present search report has been drawn up for all claims

| Place of search | Date of completion of the search | Examiner |
|---|---|---|
| The Hague | 3 May 2007 | LEGRAND, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 06 30 1152

This annex lists the patent family members relating to the patent documents cited in the above-mentioned European search report.
The members are as contained in the European Patent Office EDP file on
The European Patent Office is in no way liable for these particulars which are merely given for the purpose of information.

03-05-2007

| Patent document cited in search report | Publication date | Patent family member(s) | Publication date |
|---|---|---|---|
| US 2004044441 A1 | 04-03-2004 | AU 2003259564 A1<br>WO 2004023394 A1 | 29-03-2004<br>18-03-2004 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Neat vs Scruffy: A Survey of Computational Models for Spatial Expressions. **MUKERJEE A.** Representation and Processing of Spatial Expressions. Lawrence Erlbaum Associates Inc, 1998
- Basic Meanings of Spatial Relations: Computation and Evaluation in 3D Space. **K. P. GAPP.** In 12th National Conference on Artificial Intelligence, AAAI-94. The MIT Press, 31 July 1994, 1393-1398
- Bridging the Gap Between Language and Action. Intelligent Virtual Agents. 4th International Workshop, IVA 2003 Kloster Irsee, Germany, September 2003 Proceedings. **TOKUNAGA TAKENOBU ; KOYAMA TOMOFUMI ; SAITO SUGURU ; OKUMURA MANABU.** Subseries of Lecture Notes in Computer Science. Lecture Notes in Artificial Intelligence. Springer, September 2003, vol. 2792, 127-135